# EUROPEAN PATENT SPECIFICATION

(11) **EP 3 522 425 B1**
(45) Date of publication and mention of the grant of the patent: **11.05.2022**
(21) Application number: 17854871.5
(22) Date of filing: 27.09.2017
(51) Int. Cl.: H04L 5/00, H04W 72/08

(54) **SOUNDING REFERENCE SIGNAL TRANSMISSION AND RECEIVING METHOD, DEVICE, AND COMPUTER STORAGE MEDIUM**
TONREFERENZSIGNALÜBERTRAGUNGS- UND EMPFANGSVERFAHREN, VORRICHTUNG UND COMPUTERSPEICHERMEDIUM
DISPOSITIF ET PROCÉDÉ DE RÉCEPTION ET D'ÉMISSION DE SIGNAL DE RÉFÉRENCE DE SONDAGE ET SUPPORT DE STOCKAGE INFORMATIQUE

(30) Priority: 30.09.2016 CN 201610875409
(43) Date of publication of application: 07.08.2019
(73) Proprietor: ZTE Corporation, Shenzhen, Guangdong 518057 (CN)
(72) Inventor: JIANG, Chuangxin, Shenzhen Guangdong 518057 (CN); WU, Hao, Shenzhen Guangdong 518057 (CN); LU, Zhaohua, Shenzhen Guangdong 518057 (CN)
(74) Representative: Aipex B.V.
(86) International application number: PCT/CN2017/103593
(87) International publication number: WO 2018/059421

(56) References cited:
- WO-A1-2015/163645
- CN-A- 101 932 073
- CN-A- 103 312 434
- US-A1- 2015 139 001
- CATT: "Reference signal design for NR MIMO", 3GPP DRAFT; R1-166481, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140252, Retrieved from the Internet: URL:http://www.3gpp.org/ftp/Meetings_3GPP_ SYNC/RAN1/Docs/ [retrieved on 2016-08-21]
- CATT: "Discussion on beam training", 3GPP DRAFT; R1-166480, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140251, Retrieved from the Internet: URL:http://www.3gpp.org/ftp/Meetings_3GPP_ SYNC/RAN1/Docs/ [retrieved on 2016-08-21]
- HUAWEI ET AL: "Scenario & design criteria on flexible numerologies", 3GPP DRAFT; R1-162156, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080002, Retrieved from the Internet: URL:http://www.3gpp.org/ftp/tsg_ran/WG1_RL 1/TSGR1_84b/Docs/ [retrieved on 2016-04-02]
- OPPO: "Subcarrier spacing design for data and reference signal", 3GPP DRAFT; R1-166609, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140300, Retrieved from the Internet: URL:http://www.3gpp.org/ftp/Meetings_3GPP_ SYNC/RAN1/Docs/ [retrieved on 2016-08-21]

## Description

### TECHNICAL FIELD

The present disclosure relates to the field of communications and, in particular, to a method, a device and a computer storage medium for transmitting and receiving measurement reference signals.

### BACKGROUND

In the existing art, in addition to some special networks, the 3GPP (the 3rd Generation Partnership Project) long term evolution (LTE) generally adopts a subframe of 1ms length and a subcarrier spacing of 15kHz. This is because the LTE is mainly applied to scenarios with a carrier frequency band below 6 GHz, and the system bandwidth is not large. Of course, the subcarrier spacing of various measurement reference signals such as a channel state information reference signal (CSI-RS), a sounding reference signal (SRS) is also fixed to 15KHz.

However, in 5th generation (5G) technologies, not only the carrier frequency band below 6 GHz needs to be supported, but also the frequency band above 6 GHz needs to be supported. The subcarrier spacing is apparently unrealistic to be fixed at 15KHz. This is because in a high frequency band, too small subcarrier spacing is insufficient to resist effects of Doppler shift and phase noise. In addition, to use a large system bandwidth in the high frequency band, such as a 100M carrier bandwidth, too small subcarrier spacing will lead to excessive inverse fast fourier transform (IFFT) point operations, which will greatly increase the implementation complexity.

At present, 5G technologies, i.e., New Radio (NR) technologies, are in a heated discussion in the 3rd generation partnership project (3GPP) and a flexible transmission structure is a focus of research in physical layer. Here, the flexible transmission structure refers to parameters such as a configurable subcarrier spacing and a cyclic prefix. To achieve maximum flexibility, different transmission areas (for different transmission structures) are also possible to be multiplexed on the same carrier. On one carrier, two transmission areas are combined in time division multiplexing, frequency division multiplexing and time-frequency multiplexing. Since NR needs to support different traffic, such as traffic of machine-type communication (MTC) users, traffic of enhance mobile broadband (eMBB) users, traffic of ultra-reliable and low latency communication (uRLLC) users, and different traffic has different requirements. For example, uRLLC traffic requires a time domain symbol of shorter length, which needs to be achieved by using a larger subcarrier spacing, while MTC traffic requires a longer transmission unit, which needs to be achieved by using a smaller subcarrier spacing. Therefore, it is a trend to support different transport structures on the same carrier seems.

Intuitively, on one carrier, different transmission structures need to transmit their own measurement reference signals separately. The base station separately transmits channel measurement reference signals on two different transmission structures. However, this will bring a larger pilot overhead to the system, and further reduce the system performance.

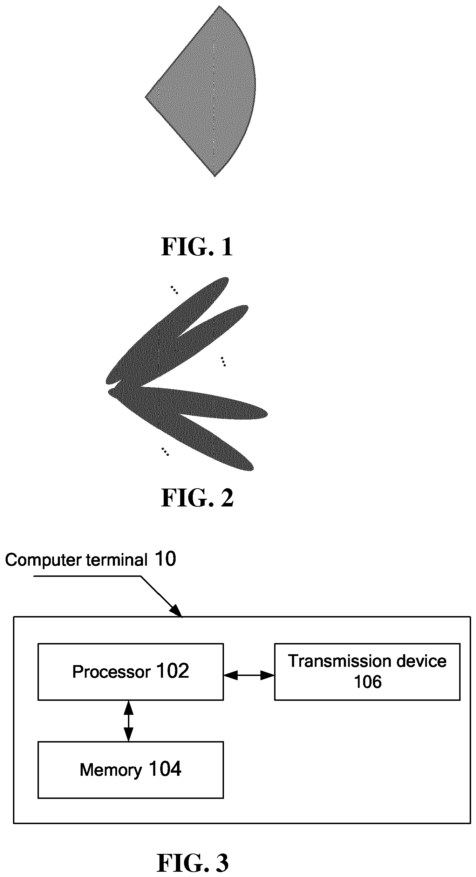

In addition, traditional LTE does not require a beam reference signal. This is because the LTE base station uses a wide beam to transmit some cell-level reference signals to achieve a cell-level coverage, as shown in FIG. 1. FIG. 1 is a structure diagram of a wide beam of the cell-level coverage in the existing art. Because the carrier frequency used by LTE is basically below 6 GHz, a wide beam formed by multiple antennas is capable of covering the entire cell. However, in 5G technologies, not only the carrier frequency band below 6 GHz needs to be supported, but also the frequency band above 6 GHz, such as 60GHz, needs to be supported. Since the large-scale path loss in the high frequency band is large, a great challenge is brought to wireless communications. However, due to a high center frequency and short wavelength in the high frequency band, and the base station is capable of accommodating a large number of antennas and using multiple antennas to form a narrow beam to form beamforming gains, the narrow beamforming has become an indispensable technology for enhancing the cell coverage in the high frequency band.

Configuring which beam for the user may need the base station to transmit the beam reference signal for the user to measure the best beam. FIG. 2 is a structure diagram of the beam reference signal in the existing art. As shown in FIG. 2, the base station may trigger or periodically transmit the beam reference signal, and different reference signals correspond to different beam directions. User equipment (UE) can feed back one or more best beam serial numbers to the base station after measuring the beam reference signal, in this way, the base station is capable of using the best beam to transmit data to specific uses at the time of subsequently transmitting the data. However, as mentioned above, if the base station needs to transmit the beam reference signal on each transmission structure, the pilot overhead of the system will be greatly increased.

No efficient solution has been provided to solve the problem of the large system pilot overhead caused by transmitting the measurement reference signals in different transmission areas multiplexed on the same or different carrier in the existing art. Further relevant technologies are also known from CATT: "Reference signal design for NR MIMO", 3GPP DRAFT, XP051140252, 21 August 2016 (2016-08-21); CATT: "Discussion on beam training", 3GPP DRAFT, XP051140251, 21 August 2016 (2016-08-21); HUAWEI ET AL: "Scenario & design criteria on flexible numerologies", 3GPP DRAFT, XP051080002, 2 April 2016 (2016-04-02); and OPPO: "Subcarrier spacing design for data and reference signal", 3GPP DRAFT, XP051140300, 21 August 2016 (2016-08-21).

### SUMMARY

Embodiments of the present disclosure provide a method and device for transmitting measurement reference signals, and method and device for receiving measurement reference signals to at least solve the problem of the large system pilot overhead caused by transmitting the measurement reference signals in different transmission areas multiplexed on the same or different carrier in the existing art. The feature of the method and device according to the present invention are defined in the independent claims. Further improvements are provided in the dependent claims.

In an aspect of the present disclosure, a method for transmitting measurement reference signals is provided. The method includes:
indicating a transmission mode of the measurement reference signals to a receiving end by at least one of: pre-defined configuration, higher layer signaling and dynamic signaling, where the transmission mode includes: transmitting, through a first transmission area, the measurement reference signals used for acquiring measurement feedback information of a second transmission area; and
receiving a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structure, and a transmission structure comprises at least one of: a subcarrier spacing and a cyclic prefix.

In an embodiment of the present disclosure, in a case where the first transmission area and the second transmission area are multiplexed on carriers in a manner of frequency division multiplexing, notifying the receiving end of the following: a subcarrier spacing, a cyclic prefix and frequency domain bandwidth length of the first transmission area and the second transmission area.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an embodiment of the present disclosure, when the measurement reference signals comprise a first part and a second part, the transmission mode further includes:
transmitting, through the first transmission area, the first part of the measurement reference signals, and transmitting, through the second transmission area, the second part of the measurement reference signals.

In an embodiment of the present disclosure, the method further includes: triggering the measurement reference signals located in the first transmission area and/or the second transmission area by triggering signaling located in the second transmission area.

In an embodiment of the present disclosure, the method further includes: triggering the measurement reference signals located in the first transmission area by triggering signaling located in the second transmission area.

In an embodiment of the present disclosure, the method further includes: triggering the first part of the measurement reference signals located in the first transmission area by the triggering signaling located in the first transmission area, and triggering the second part of the measurement reference signals located in the second transmission area by the triggering signaling located in the second transmission area.

In an embodiment of the present disclosure, the receiving a measurement result fed back by the receiving end based on the measurement reference signals comprises:
receiving a measurement result of the second transmission area fed back by the receiving end on the first transmission area; or
receiving the measurement result of the second transmission area fed back by the receiving end on the second transmission area.

In an embodiment of the present disclosure, the receiving a measurement result fed back by the receiving end based on the measurement reference signals comprises:
receiving a first part of the measurement result of the second transmission area fed back by the receiving end on the first transmission area, and a second part of the measurement result of the second transmission area fed back by the receiving end on the second transmission area, where the first part of the measurement result corresponds to the first part of the measurement reference signals, and the second part of the measurement result corresponds to the second part of the measurement reference signals.

In another aspect of the present disclosure, a method for receiving measurement reference signals is provided. The method includes:
receiving, by a receiving end, indication information by at least one of: pre-defined configuration, higher layer signaling and dynamic signaling;
determining, by the receiving end, a transmission mode of measurement reference signals according to the received indication information, where the transmission mode at least includes: transmitting the measurement reference signals used for acquiring measurement feedback information of a second transmission area on a first transmission area;
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

In an embodiment of the present disclosure, in a case where the first transmission area and the second transmission area are multiplexed on carriers in a manner of frequency division multiplexing, receiving configuration about the following: a subcarrier spacing, a cyclic prefix and frequency domain bandwidth length of the first transmission area and the second transmission area.

In an embodiment of the present disclosure, feeding back a measurement result based on the measurement reference signals, wherein the measurement result comprises at least one of: state information about uplink channels, state information about downlink channels, an antenna port number, a beam ID, a reference signal resource number and an interference measurement result. In an embodiment of the present disclosure, when the measurement reference signals comprise a first part and a second part, the receiving mode further includes:
receiving, through the first transmission area, the first part of the measurement reference signals, and receiving, through the second transmission area, the second part of the measurement reference signals.

In an embodiment of the present disclosure, feeding back a measurement result based on the measurement reference signals comprises:
feeding back a measurement result of the second transmission area on the first transmission area; or
feeding back the measurement result of the second transmission area on the second transmission area.

In an embodiment of the present disclosure, feeding back a measurement result based on the measurement reference signals comprises: feeding back a first part of the measurement result on the first transmission area and feeding back a second part of the measurement result on the second transmission area, where the first part of the measurement result corresponds to the first part of the measurement reference signals and the second part of the measurement result corresponds to the second part of the measurement reference signals.

Another aspect of the present disclosure provides a device for transmitting measurement reference signals, which is applied to a transmitting end. The device includes:
an indication module, configured to indicate a transmission mode of measurement reference signals to a receiving end by at least one of: pre-defined configuration, higher layer signaling and dynamic signaling, where the transmission mode includes: transmitting, through a first transmission area, the measurement reference signals used for acquiring measurement feedback information of a second transmission area;
wherein the device is further configured to receive a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structures, and a transmission structure comprises at least one of: a subcarrier spacing and a cyclic prefix..

Another aspect of the present disclosure provides a device for receiving measurement reference signals, which is applied to a receiving end. The device includes:
a third receiving module, configured to receive indication information by at least one of: predefined configuration, higher layer signaling and dynamic signaling;
a determination module, configured to determine a receiving mode of measurement reference signals according to the received indication information, where the receiving mode at least includes: receiving the measurement reference signals used for acquiring measurement feedback information of a second transmission area on a first transmission area;
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

Another aspect of the present disclosure provides a device for transmitting measurement reference signals, which is applied to a transmitting end. The device includes: a first processor; a first memory, which is configured to store instructions executable by the first processor; where the first processor is configured to perform, according to the instructions stored in the first memory, the following operations:
indicating a transmission mode of measurement reference signals to a receiving end by at least one of: pre-defined configuration, higher layer signaling and dynamic signaling, where the transmission mode includes: transmitting, through a first transmission area, the measurement reference signals used for acquiring measurement feedback information of a second transmission area; and
receiving a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structures, and a transmission structure comprises at least one of: a subcarrier spacing and a cyclic prefix.

Another aspect of the present disclosure provides a device for receiving measurement reference signals, which is applied to a receiving end. The device includes: a second processor; a second memory, which is configured to store instructions executable by the second processor; where the second processor is configured to perform, according to the instructions stored in the second memory, the following operations:
receiving indication information by at least one of: pre-defined configuration, higher layer signaling and dynamic signaling.
determining a transmission mode of the measurement reference signals according to the received indication information, where the transmission mode at least includes: transmitting the measurement reference signals used for acquiring measurement feedback information of a second transmission area on a first transmission area;
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

In an embodiment of the present disclosure, a computer storage medium is further provided. The computer storage medium may store executable instructions for executing the method for transmitting measurement reference signals provided in the embodiments described above.

In an embodiment of the present disclosure, a computer storage medium is further provided. The computer storage medium may store executable instructions for executing the method for receiving measurement reference signals provided in the embodiments described above.

Through solutions in the embodiments of the present disclosure, a transmission mode of measurement reference signals to a receiving end is indicated by at least one of: pre-defined configuration, higher layer signaling and dynamic signaling, where the transmission mode includes: transmitting all or part of measurement reference signals for acquiring measurement feedback information of a second transmission area through a first transmission area. A problem of the large system pilot overhead caused by transmitting the measurement reference signals in different transmission areas on the same or different carrier multiplexed in the existing art is solved, and the pilot overhead of the second transmission area is effectively reduced.

### BRIEF DESCRIPTION OF DRAWINGS

The drawings described herein are used to provide a further understanding of the present disclosure, and form a part of the present application. The exemplary embodiments and descriptions thereof in the present disclosure are used to explain the present disclosure and do not limit the present disclosure in any improper way. In the drawings:
FIG. 1 is a structure diagram of a wide beam of a cell-level coverage in the existing art;
FIG. 2 is a structure diagram of a beam reference signal in the existing art;
FIG. 3 is a block diagram of hardware of a mobile terminal of a method for transmitting measurement reference signals according to an embodiment of the present disclosure;
FIG. 4 is a flowchart 1 of a method for transmitting measurement reference signals according to embodiment one of the present disclosure;
FIG. 5 is a flowchart 2 of a method for transmitting measurement reference signals according to embodiment one of the present disclosure;
FIG. 6 is a flowchart 1 of a method for receiving measurement reference signals according to embodiment one of the present disclosure;
FIG. 7 is a flowchart 2 of a method for receiving measurement reference signals according to embodiment one of the present disclosure;
FIG. 8 is a block diagram 1 of a device for transmitting measurement reference signals according to embodiment two of the present disclosure;
FIG. 9 is a block diagram 2 of a device for transmitting measurement reference signals according to embodiment two of the present disclosure;
FIG. 10 is a block diagram 1 of a device for receiving measurement reference signals according to embodiment two of the present disclosure;
FIG. 11 is a block diagram 2 of a device for receiving measurement reference signals according to embodiment two of the present disclosure;
FIG. 12 is a block diagram of a device for transmitting measurement reference signals according to embodiment two of the present disclosure;
FIG. 13 is a block diagram of a device for transmitting measurement reference signals according to embodiment two of the present disclosure;
FIG. 14 is a structure diagram of two transmission areas frequency division multiplexed according to embodiment three of the present disclosure;
FIG. 15 is a structure diagram of two transmission areas time division multiplexed according to embodiment three of the present disclosure;
FIG. 16 is a structure diagram of two transmission areas time-frequency multiplexed according to embodiment three of the present disclosure;
FIG. 17 is a structure diagram of three transmission areas frequency division multiplexed according to embodiment three of the present disclosure;
FIG. 18 is a structure diagram illustrating triggering measurment reference signals at the time of two transmission areas frequency division multiplexed according to embodiment four of the present disclosure;
FIG. 19 is a structure diagram illustrating triggering measurement reference signals at the time of three transmission areas frequency division multiplexed according to embodiment four of the present disclosure;
FIG. 20 is a structure diagram illustrating triggering measurement reference signals at the time of two transmission areas time division multiplexed according to embodiment four of the present disclosure;
FIG. 21 is a structure diagram illustrating triggering measurement reference signals at the time of frequency division multiplexing of two transmission areas according to embodiment five of the present disclosure;
FIG. 22 is a structure diagram illustrating triggering measurement reference signals at the time of frequency division multiplexing of two transmission areas according to embodiment five of the present disclosure;
FIG. 23 is a structure diagram illustrating triggering measurement reference signals at the time of two transmission areas time division multiplexed according to embodiment five of the present disclosure; and
FIG. 24 is a structure diagram illustrating triggering measurement reference signals at the time of two transmission areas frequency division multiplexed according to embodiment six of the present disclosure.

### DETAILED DESCRIPTION

The present disclosure will be described hereinafter in detail with reference to the drawings and in conjunction with embodiments. It is to be noted that if not in collision, the embodiments and features therein in the present application may be combined with each other.

It is to be noted that the terms "first", "second" and the like in the description, claims and above drawings of the present disclosure are used to distinguish between similar objects and are not necessarily used to describe a particular order or sequence. It should be understood that the data used in this way is interchangeable when appropriate so that embodiments of the present disclosure described herein can also be implemented in a sequence not illustrated or described herein. In addition, the terms "comprising", "including" or any other variations thereof described herein are intended to encompass a non-exclusive inclusion. For example, a process, method, system, product or device that includes a series of steps or units not only includes the expressly listed steps or units but may also include other steps or units that are not expressly listed or are inherent to such process, method, product or device.

### Embodiment one

An embodiment of the present disclosure provides a method for transmitting measurement reference signals. It is to be noted that steps illustrated in the flowcharts in the drawings may be performed by a computer system such as a group of computers capable of executing instructions, and although logical sequences are illustrated in the flowcharts, the illustrated or described steps may be performed in sequences different from those described herein in some cases.

The method embodiment provided by embodiment one of the present application may be executed on a mobile terminal, a computer terminal or other similar computing apparatuses. In a case of executing on the computer terminal, FIG. 3 is a block diagram of hardware of the computer terminal of a method for transmitting measurement reference signals according to an embodiment of the present disclosure. As shown in FIG. 3, a computer terminal 10 may include one or more (only one is shown in the figure) processors 102 (which may include, but are not limited to, a micro-processor MCU, a programmable logic device FPGA or another processing device) , a memory 104 for storing data, and a transmission module 106 for implementing a communication function. It will be understood by those skilled in the art that the structure shown in FIG. 3 is merely illustrative, and not intended to limit the structure of the electronic device described above. For example, the computer terminal 10 may further include more or fewer components than the components shown in FIG. 3, or has a configuration different from the configuration shown in FIG. 1.

The memory 104 may be used for storing software programs and modules of application software, such as program instructions/modules corresponding to the method for transmitting measurement reference signals in the embodiment of the present disclosure. The processor 102 executes the software programs and modules stored in the memory 104 so as to perform various function applications and data processing, that is, to implement a vulnerability detection method of the application programs described above. The memory 104 may include a high-speed random access memory, and may further include a nonvolatile memory, such as one or more magnetic storage devices, flash memories or other nonvolatile solid-state memories. In some examples, the memory 104 may further include memories that are remotely disposed with respect to the processor 102. These remote memories may be connected to the computer terminal 10 via a network. Examples of the network described above include, but are not limited to, the Internet, an intranet, a local area network, a mobile communication network and a combination thereof.

The transmission device 106 is configured to receive and transmit data via a network. The above-mentioned specific examples of the network may include a wireless network provided by a communication provider of the computer terminal 10. In one example, the transmission device 106 includes a network interface controller (NIC), which may be connected to other network devices through a base station and thus is capable of communicating with the Internet. In one example, the transmission device 106 may be a radio frequency (RF) module, which is used for communicating with the Internet in a wireless way.

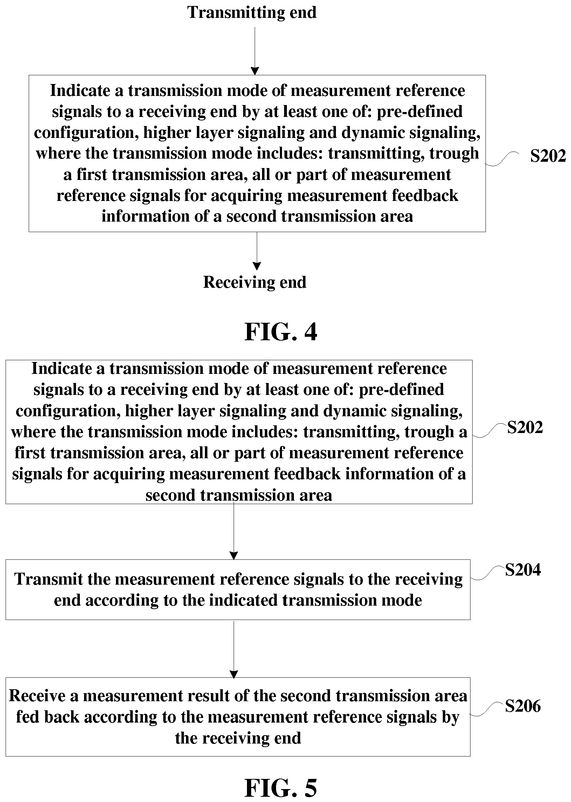

In the above operating environment, the present application provides a method for transmitting measurement reference signals as shown in FIG. 2. FIG. 4 is a flowchart 1 illustrating a method for transmitting measurement reference signals according to embodiment one of the present disclosure. As shown in FIG. 4, the method includes steps described below.

In step S202, a transmitting end indicates a transmission mode of measurement reference signals to a receiving end by at least one of: pre-defined configuration, higher layer signaling and dynamic signaling, where the transmission mode includes: transmitting, through a first transmission area, all or part of measurement reference signals for acquiring measurement feedback information of a second transmission area.

Through the above step, indicating the transmission mode of the measurement reference signals at the receiving end by at least one of: pre-defined configuration, higher layer signaling and dynamic signaling, where the transmission mode includes: transmitting, through a first transmission area, all or part of measurement reference signals for acquiring measurement feedback information of a second transmission area. A problem of the large system pilot overhead caused by transmitting the measurement reference signals by different transmission areas multiplexed on the same or different carriers in the existing art is solved, and the pilot overhead of the second transmission area is effectively reduced.

It is to be noted that the present embodiment is applicable not only to scenarios of two transmission areas, but also to scenarios of multiple transmission areas such as three or four transmission areas. The processing of a third transmission area or a four transmission area is similar to that of the second transmission area, and the number of transmission areas is not limited in the present embodiment. The description herein is applicable to all the embodiments of the present disclosure.

In an embodiment of the present disclosure, the first transmission area and the second transmission area are multiplexed on one or more carriers in a manner of at least one of: time division multiplexing, frequency division multiplexing and time-frequency multiplexing. The two transmission areas which are frequency division multiplexed may be overlapped in the frequency domain.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an embodiment of the present disclosure, the measurement feedback information includes at least one of: state information about uplink channels, state information about downlink channels, the number of an antenna port, the ID of a beam, a receiving mode, a transmission mode, the number of a reference signal resource and an interference measurement result.

In an optional example of the embodiment, the measurement reference signals for acquiring the measurement feedback information of the second transmission area include a first part and a second part, the transmission mode of the measurement reference signals further includes: transmitting, through the first transmission area, the first part of the measurement reference signals for acquiring the measurement feedback information of the second transmission area, and transmitting, through the second transmission area, the second part of the measurement reference signals for acquiring the measurement feedback information of the second transmission area.

FIG. 5 is a flowchart 2 illustrating a method for transmitting measurement reference signals according to embodiment one of the present disclosure. As shown in FIG. 5, in an optional example of the embodiment, after step S202, the method further includes steps described below.

In step S204, the measurement reference signals are transmitted to the receiving end according to the indicated transmission mode.

In step S206, a measurement result of the second transmission area fed back according to the measurement reference signals by the receiving end is received.

In an embodiment of the present disclosure, the triggering of the measurement reference signals in the above step S204 may be implemented by at least one of:
triggering the measurement reference signals located in the first transmission area and/or the second transmission area by triggering signaling located in the second transmission area;
triggering the measurement reference signals located in the first transmission area by triggering signaling located in the first transmission area;
triggering the first part of the measurement reference signals located in the first transmission area by the triggering signaling located in the first transmission area, and triggering the second part of the measurement reference signals located in the second transmission area by the triggering signaling located in the second transmission area.

In an embodiment of the present disclosure, the feedback of the measurement result in step S206 may be implemented by at least one of:
receiving the measurement result of the second transmission area fed back by the receiving end on the first transmission area;
receiving the measurement result of the second transmission area fed back by the receiving end on the second transmission area; or
receiving a first part of the measurement result of the second transmission area fed back by the receiving end on the first transmission area, and a second part of the measurement result of the second transmission area fed back by the receiving end on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

In an embodiment of the present disclosure, the subcarrier spacing corresponding to the first transmission area is greater than the subcarrier spacing corresponding to the second transmission area.

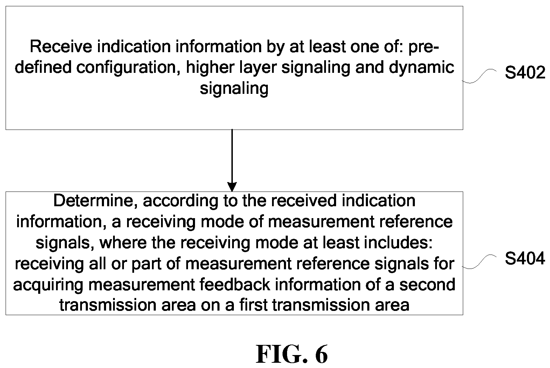

For a better understanding of the technical solutions of the present disclosure, the embodiment further provides a method for receiving measurement reference signals. FIG. 6 is a flowchart 1 illustrating a method for receiving measurement reference signals according to embodiment one of the present disclosure. As shown in FIG. 6, the method includes steps described below.

In step S402, a receiving end receives indication information by at least one of: pre-defined configuration, higher layer signaling and dynamic signaling.

In step S404, the receiving end determines a receiving mode of measurement reference signals according to the received indication information, where the receiving mode at least includes: receiving all or part of the measurement reference signals for acquiring measurement feedback information of a second transmission area on a first transmission area.

Through the above steps, the receiving end receives the indication information by at least one of: pre-defined configuration, higher layer signaling and dynamic signaling; determines a receiving mode of the measurement reference signals according to the received indication information, where the receiving mode at least includes: receiving all or part of measurement reference signals for acquiring the measurement feedback information of the second transmission area on the first transmission area. A problem of the large system pilot overhead caused by transmitting the measurement reference signals on different transmission areas multiplexed on the same or different carriers in the existing art is solved, and the pilot overhead of the second transmission area is effectively reduced.

In an embodiment of the present disclosure, the first transmission area and the second transmission area are multiplexed on one or more carriers in a manner of at least one of: time division multiplexing, frequency division multiplexing and time-frequency multiplexing.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an optional example of the embodiment, the measurement reference signals for acquiring the measurement feedback information of the second transmission area include a first part and a second part, the receiving mode of the measurement reference signals further includes: receiving, through the first transmission area, the first part of the measurement reference signals for acquiring the measurement feedback information of the second transmission area, and receiving, through the second transmission area, the second part of the measurement reference signals for acquiring the measurement feedback information of the second transmission area .

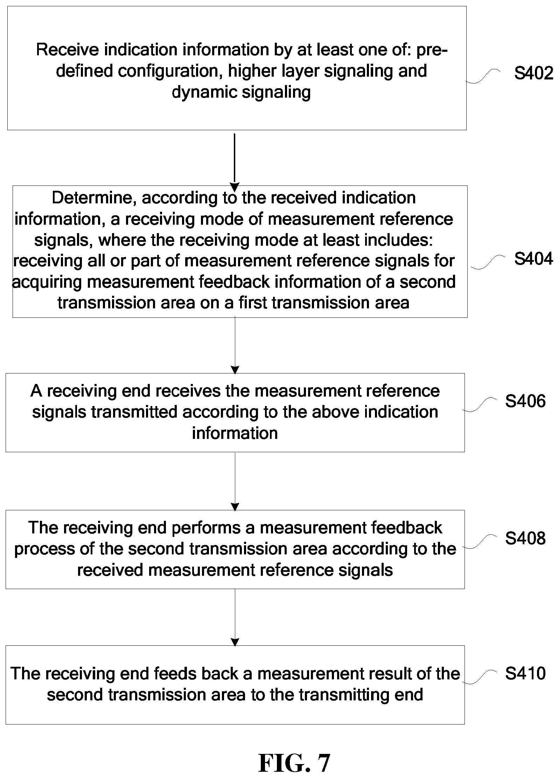

FIG. 7 is a flowchart 2 illustrating a method for receiving measurement reference signals according to embodiment one of the present disclosure. As shown in FIG. 7, after step S402, the method further includes steps described below.

In step S406, the receiving end receives the measurement reference signals transmitted according to the above indication information.

In step S408, the receiving end performs a measurement feedback process of the second transmission area according to the received measurement reference signals.

In step S410, the receiving end feeds back a measurement result of the second transmission area to the transmitting end.

In an optional example of the embodiment, the preceding step S408 may be implemented in at least one of manners:
feeding back a measurement result of the second transmission area on the first transmission area;
feeding back a measurement result of the second transmission area on the second transmission area; or
feeding back a first part of the measurement result on the first transmission area, feeding back a second part of the measurement result on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

In an embodiment of the present disclosure, the subcarrier spacing corresponding to the first transmission area is greater than the subcarrier spacing corresponding to the second transmission area.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present disclosure substantially, or the part contributing to the related art, may be embodied in the form of a software product. The computer software product is stored in a storage medium (such as a read-only memory (ROM)/a random access memory (RAM), a magnetic disk or an optical disk) and includes several instructions for enabling a terminal device (which may be a mobile phone, a computer, a server, a network device or the like) to execute the method according to each embodiment of the present disclosure.

### Embodiment two

This embodiment further provides a device for transmitting measurement reference signals. The device is configured to implement the embodiments and preferred implementations of the above method for transmitting measurement reference signals. What has been described will not be repeated. As used below, a term "module" may be software, hardware or a combination thereof capable of implementing predetermined functions. The device in the embodiment described below is preferably implemented by software, but implementation by hardware or by a combination of software and hardware is also possible and conceived.

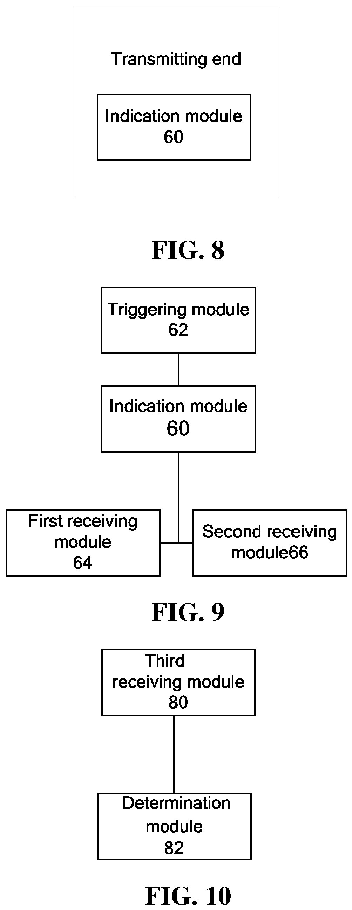

FIG. 8 is a block diagram 1 of a device for transmitting measurement reference signals according to embodiment two of the present disclosure. As shown in FIG. 8, the device includes:
an indication module 60, configured to indicate a transmission mode of measurement reference signals to a receiving end by at least one of: pre-defined configuration, higher layer signaling and dynamic signaling, where the transmission mode includes: transmitting, through a first transmission area, all or part of measurement reference signals for acquiring measurement feedback information of a second transmission area.

Through the above device, the indication module 60 indicates a transmission mode of measurement reference signals to a receiving end. The transmission mode includes: transmitting, through a first transmission area, all or part of measurement reference signals for acquiring measurement feedback information of a second transmission area. A problem of the large system pilot overhead caused by transmitting the measurement reference signals on different transmission areas multiplexed on the same or different carrier in the existing art is solved, and the pilot overhead of the second transmission area is effectively reduced.

In an embodiment of the present disclosure, the first transmission area and the second transmission area are multiplexed on one or more carriers in a manner of at least one of: time division multiplexing, frequency division multiplexing and time-frequency multiplexing.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an optional example of the embodiment, the measurement reference signals for acquiring the measurement feedback information of the second transmission area include a first part and a second part, the indication module 60 is further configured to indicate the following transmission mode: transmitting, through the first transmission area, the first part of the measurement reference signals for acquiring the measurement feedback information of the second transmission area, and transmitting, through the second transmission area, the second part of the measurement reference signals for acquiring the measurement feedback information of the second transmission area .

FIG. 9 is a block diagram 2 of a device for transmitting measurement reference signals according to embodiment two of the present disclosure. As shown in FIG. 9, the device further includes: a triggering module 62, which is configured to:
trigger the measurement reference signals located in the first transmission area and/or the second transmission area by triggering signaling located in the second transmission area;
trigger the measurement reference signals located in the first transmission area by triggering signaling located in the first transmission area;
trigger the first part of the measurement reference signals located in the first transmission area by the triggering signaling located in the first transmission area, and triggering the second part of the measurement reference signals located in the second transmission area by the triggering signaling located in the second transmission area.

In an embodiment of the present disclosure, the device further includes:
a first receiving module 64, configured to:
receive the measurement result of the second transmission area fed back by the receiving end on the first transmission area; or
receive the measurement result of the second transmission area fed back by the receiving end on the second transmission area; and
a second receiving module 66, configured to: receive a first part of the measurement result of the second transmission area fed back by the receiving end on the first transmission area, and a second part of the measurement result of the second transmission area fed back by the receiving end on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

This embodiment further provides a device for receiving measurement reference signals. The device is configured to implement the embodiments and preferred implementations of the above method for receiving measurement reference signals. What has been described will not be repeated. As used below, a term "module" may be software, hardware or a combination thereof capable of implementing predetermined functions. The device in the embodiment described below is preferably implemented by software, but implementation by hardware or by a combination of software and hardware is also possible and conceived.

FIG. 10 is a block diagram 1 of a device for receiving measurement reference signals according to embodiment two of the present disclosure. As shown in FIG. 10, the device includes:
a third receiving module 80, configured to receive indication information by at least one of: pre-defined configuration, higher layer signaling and dynamic signaling;
a determination module 82, configured to determine a receiving mode of measurement reference signals according to the received indication information, where the receiving mode at least includes: receiving all or part of measurement reference signals for acquiring measurement feedback information of a second transmission area on a first transmission area.

Through the above device, the third receiving module 80 receives the indication information. The indication information is used for indicating the transmission mode of the measurement reference signals. The transmission mode includes: transmitting all or part of the measurement reference signals for measuring in the second transmission area by the first transmission area. A problem of the large system pilot overhead caused by transmitting the measurement reference signals on different transmission areas multiplexed on the same or different carrier in the existing art is solved, and the pilot overhead of the second transmission area is effectively reduced.

In an embodiment of the present disclosure, the first transmission area and the second transmission area are multiplexed on one or more carriers in a manner of at least one of: time division multiplexing, frequency division multiplexing and time-frequency multiplexing.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an optional example of the embodiment, the measurement reference signals for acquiring the measurement feedback information of the second transmission area include a first part and a second part, the determination module 82 is further configured to determine the following receiving mode: transmitting, through the first transmission area, the first part of the measurement reference signals for acquiring the measurement feedback information of the second transmission area, and transmitting, through the second transmission area, the second part of the measurement reference signals for acquiring the measurement feedback information of the second transmission area.

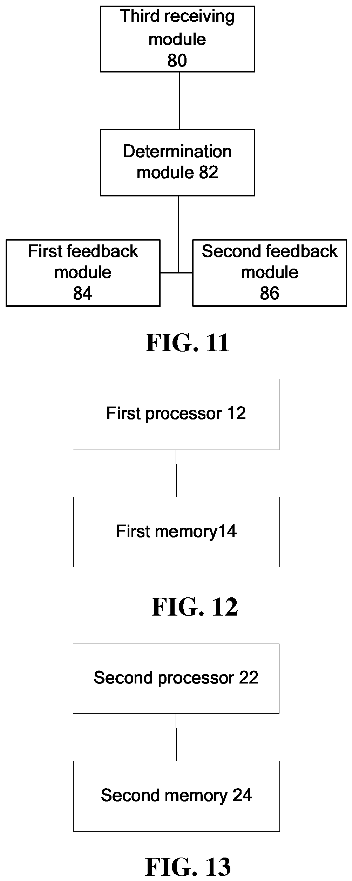

FIG. 11 is a block diagram 2 of a device for receiving measurement reference signals according to embodiment two of the present disclosure. As shown in FIG. 11, the device further includes:
a first feedback module 84, configured to feed back a measurement result of the second transmission area on the first transmission area; or feed back the measurement result of the second transmission area on the second transmission area; and
a second feedback module 86, configured to feed back a first part of the measurement result on the first transmission area, and feed back a second part of the measurement result on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

This embodiment further provides a device for transmitting measurement reference signals which is applied to a transmitting end to illustrate an application body in the embodiments of the above device for transmitting measurement reference signals. The device is used for implementing the embodiments and preferred embodiments of the above method for transmitting measurement reference signals. What has been described will not be repeated.

FIG. 12 is a block diagram of a device for transmitting measurement reference signals according to embodiment two of the present disclosure. As shown in FIG. 12, the device includes:
a first processor 12; and a first memory 14, which is configured to store instructions executable by the first processor 12. The first processor 12 is configured to perform, according to the instructions stored in the first memory 14, the following operations:
indicating a transmission mode of measurement reference signals to a receiving end by at least one of: pre-defined configuration, higher layer signaling and dynamic signaling, where the transmission mode includes: transmitting, through a first transmission area, all or part of measurement reference signals for acquiring measurement feedback information of a second transmission area.

Through the above step, the first processor 12 indicates the transmission mode of the measurement reference signals at the receiving end by at least one of: pre-defined configuration, higher layer signaling and dynamic signaling, where the transmission mode includes: transmitting, through the first transmission area, all or part of the measurement reference signals for acquiring measurement feedback information of the second transmission area. A problem of the large system pilot overhead caused by transmitting the measurement reference signals on different transmission areas multiplexed on the same or different carriers in the existing art is solved, and the pilot overhead of the second transmission area is effectively reduced.

The transmitting end here may be a base station, or may be a terminal.

In an embodiment of the present disclosure, the first transmission area and the second transmission area are multiplexed on one or more carriers in a manner of at least one of: time division multiplexing, frequency division multiplexing and time-frequency multiplexing.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal,, a non-precoding reference signal, a precoding reference signal and a sounding reference signal.

In an optional example of the embodiment, the measurement reference signals for acquiring the measurement feedback information of the second transmission area include a first part and a second part, the first processor 12 is further configured to indicate the following transmission mode: transmitting, through the first transmission area, the first part of the measurement reference signals for acquiring the measurement feedback information of the second transmission area, and transmitting, through the second transmission area, the second part of the measurement reference signals for acquiring the measurement feedback information of the second transmission area.

In an optional example of the embodiment, the first processor 12 is further configured to perform the following operations:
triggering the measurement reference signals located in the first transmission area and/or the second transmission area by triggering signaling located in the second transmission area;
triggering the measurement reference signals located in the first transmission area by triggering signaling located in the first transmission area;
triggering the first part of the measurement reference signals located in the first transmission area by the triggering signaling located in the first transmission area, and triggering the second part of the measurement reference signals located in the second transmission area by the triggering signaling located in the second transmission area.

In an optional example of the embodiment, the first processor 12 is further configured to perform the following operations:
receiving the measurement result of the second transmission area fed back by the receiving end on the first transmission area; or
receiving the measurement result of the second transmission area fed back by the receiving end on the second transmission area.

In an optional example of the embodiment, the first processor 12 is further configured to perform the following operations: receiving a first part of the measurement result of the second transmission area fed back by the receiving end on the first transmission area, and a second part of the measurement result of the second transmission area fed back by the receiving end on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

This embodiment further provides a device for receiving measurement reference signals which is applied to a receiving end to illustrate an application body in the embodiments of the above device for receiving measurement reference signals. The device is used for implementing the embodiments and preferred embodiments of the above method for receiving measurement reference signals. What has been described will not be repeated.

FIG. 13 is a block diagram of a device for receiving measurement reference signals according to embodiment two of the present disclosure. As shown in FIG. 13, the device includes: a second processor 22; a second memory 24, which is configured to store instructions executable by the second processor 22. The second processor 22 is configured to perform, according to the instructions stored in the second memory 24, the following operations:
receiving indication information by at least one of: pre-defined configuration, higher layer signaling and dynamic signaling; and determining a receiving mode of the measurement reference signals according to the received indication information. The receiving mode at least includes: receiving all or part of measurement reference signals for acquiring the measurement feedback information of the second transmission area on the first transmission area.

Through the above device, the second processor 22 receives the indication information by at least one of: pre-defined configuration, higher layer signaling and dynamic signaling, determines, according to the received indication information, a receiving mode of the measurement reference signals. The receiving mode at least includes: receiving all or part of measurement reference signals for acquiring the measurement feedback information of the second transmission area on the first transmission area. A problem of the large system pilot overhead caused by transmitting the measurement reference signals on different transmission areas multiplexed on the same or different carriers in the existing art is solved, and the pilot overhead of the second transmission area is effectively reduced.

The receiving end here may be a base station, or may be a terminal.

In an embodiment of the present disclosure, the first transmission area and the second transmission area are multiplexed on one or more carriers in a manner of at least one of: time division multiplexing, frequency division multiplexing and time-frequency multiplexing.

In an embodiment of the present disclosure, different transmission areas correspond to different transmission structures, the same transmission area corresponds to the same transmission structure, and the transmission structure includes at least one of: a subcarrier spacing and a cyclic prefix.

In an embodiment of the present disclosure, the measurement reference signals include at least one of: a beam measurement reference signal, a channel measurement reference signal, an interference measurement reference signal, a non-precoding reference signal, a precoding reference signal and a sounding reference signal.

In an optional example of the embodiment, the measurement reference signals for acquiring the measurement feedback information of the second transmission area include a first part and a second part, the second processor 22 is further configured to determine the following receiving mode: receiving, through the first transmission area, the first part of the measurement reference signals for acquiring the measurement feedback information of the second transmission area, and receiving, through the second transmission area, the second part of the measurement reference signals for acquiring the measurement feedback information of the second transmission area.

In an optional example of the embodiment, the second processor 22 is further configured to perform the following operations:
feeding back a measurement result of the second transmission area on the first transmission area;
feeding back a measurement result of the second transmission area on the second transmission area; or
feeding back a first part of the measurement result on the first transmission area, feeding back a second part of the measurement result on the second transmission area, where the first part of the measurement result corresponds to the first part of the measurement reference signals, and the second part of the measurement result corresponds to the second part of the measurement reference signals.

It is to be noted that the measurement result fed back here is transmitted on uplink transmission areas.

### Embodiment three

The present disclosure will be further described in detail in connection with drawings, from which the purpose, technical solutions and advantages of the present disclosure will be more clear. It is to be noted that if not in collision, the embodiments and features therein in the present disclosure may be combined with each other.

A method for transmitting and receiving measurement reference signals is provided by the present disclosure, including:
indicating by a transmitting end that all or part of measurement reference signals for acquiring measurement feedback information of a second transmission area is transmitted on a first transmission area.

That is, a base station uses the measurement feedback information to determine data of the user in the second transmission area or a control channel or a transmission mode of a reference signal, and all or part of the measurement reference signals corresponding to the measurement feedback information are transmitted on the first transmission area.

For example, for beam reference signals, if it is indicated that the beam reference signals for acquiring beam measurement feedback information of the second transmission area are transmitted on the first transmission area, the user feeds back the best beam ID or port number after measuring the beam reference signals transmitted on the first transmission area, the base station determines, based on the feedback result, a transmission beam used by the user for transmitting a downlink control channel or data channel.

For example, for channel measurement reference signals, if it is indicated that the reference signals for acquiring the measurement feedback information of the second transmission area include two parts, a first part is transmitted on the first transmission area, a second part is transmitted on the second transmission area. The user feeds back the measurement result after measuring the first part of the reference signals on the first transmission area, the base station determines, based on this feedback information, the transmission mode of data or the control channel or the reference signals of the second transmission area, such as determining the transmission mode of the second part of the measurement reference signals. Generally, the base station obtains long-term channel information from the first part feedback measurement result, and then determines a direction of the second part of the channel measurement reference signals by using this long-term channel information.

To sum up, the measurement feedback information described in the embodiment of the present disclosure finally is used for determining the transmission or receiving mode of the second transmission area.

The transmitting end may be the base station, or may be the UE. As for the transmission of a downlink measurement reference signal, the transmitting end refers to the base station, and the receiving end refers to the UE. The downlink measurement reference signal includes reference signals for measuring channels or beams such as a channel reference signal and a beam measurement reference signal. As for the transmission of an uplink measurement reference signal, the UE transmits the measurement reference signal and the base station receives, but the transmission of the uplink measurement reference signal is still triggered by the base station. The uplink measurement reference signal includes a reference signal for uplink channel or beam measurement such as an uplink sounding reference signal, an uplink beam measurement reference signal.

The measurement feedback information includes at least one of: state information about uplink channels, state information about downlink channels, an antenna port number, a beam ID, a receiving mode, a transmission mode, a reference signal resource number and an interference measurement result.

The measurement feedback information generally is based on the measurement result and feedback result of the corresponding reference signal. If all reference signals for acquiring the measurement feedback information of the second transmission area are beam reference signals, and generally the beam reference signals include multiple beams or multiple ports, then the measurement feedback information obtained after the user measures the beam reference signals is the number of the beam or the number of the port.

If reference signals for acquiring the measurement feedback information of the second transmission area are channel measurement reference signals, then the measurement feedback information obtained after the user measures is station information of corresponding channel, including one or more of RI, pre-coding indication information and CQI. If the channel measurement reference signals correspond to multiple channel measurement reference signal resources, the feedback information may also include the number of channel measurement reference signal resource.

If part of reference signals for acquiring the measurement feedback information of the second transmission area are the channel measurement reference signals, that is, the channel measurement reference signals corresponding to the measurement feedback information is hybrid channel measurement reference signals. The hybrid measurement reference signals include two parts, the first part is transmitted on the first transmission area and the second part is transmitted on the second transmission area. Each part of the measurement feedback information corresponds to the measurement result of the first part of the measurement reference signals and the measurement result of the second part of the measurement reference signal. The measurement result includes at least one of: RI, a first part of pre-coding indication information or long-term pre-coding indication information, CQI and CRI (the channel measurement reference signal resources).

If the reference signals are the uplink channel measurement reference signals, then the measurement feedback information is the state information about uplink channels.

Generally, the measurement feedback information corresponds to one measurement configuration, this measurement configuration includes the number of ports corresponding to the reference signals, a time-frequency resource position and the number of resources. For example, If the reference signals are the beam reference signals, the measurement configuration may configure the number of ports, such as eight, the time domain position, such as transmitting on which subframe, or which time domain OFDM symbol, the frequency domain position, such as transmitting on the whole bandwidth or the upper half bandwidth in the frequency domain. The measurement feedback information may be a corresponding port number, for example, after measuring the beam reference signals, the user feeds back the best one or several port numbers corresponding to the beam reference signals to the base station.

If the reference signals are the hybrid channel measurement reference signals, the measurement configuration may include two types of channel measurement reference signals, i.e., the two parts of measurement reference signals described above, and include the number of resources and time-frequency position of each part of the channel measurement reference signals.

Different transmission areas may be multiplexed by frequency division or time division, or a combination thereof on one carrier bandwidth. A transmission time unit of a transmission area may be one or more minimum scheduling time units, such as one or more subframes. Different transmission areas correspond to different transmission structures, that is, the subcarrier spacing or the length of the cyclic prefix is different. In the same transmission area, the transmission structure is the same. A frequency domain length, a starting position, a time domain position and a carrier spacing in different transmission areas may be notified to the user by the base station through a broadcast channel or higher signaling. In this case, the division of the time-frequency position of different transmission area is semi-static. Of course, the possibility of dynamic indication division is not excluded.

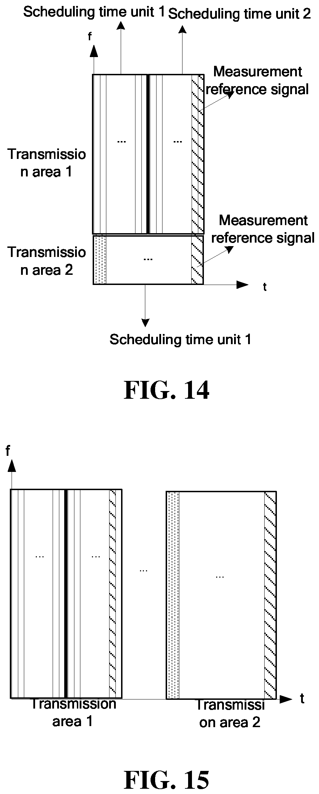

FIG. 14 is a structure diagram of two transmission areas frequency division multiplexed according to embodiment three of the present disclosure. As described in FIG. 14, the first transmission area (i.e., transmission area 1 in FIG. 14) and the second transmission area (i.e., transmission area 2 in FIG. 14) are frequency division multiplexed on the system bandwidth. The base station may notify the user that the two transmission areas are frequency domain multiplexed through broadcast signaling or higher layer signaling, and notify parameters such as the frequency domain bandwidth length, the subcarrier spacing and cyclic prefix of each transmission area.

Of course, the division of the first transmission area and the second transmission area may also be predefined, so that no higher layer signaling is required. Further, all or part of the measurement reference signals in the measurement feedback process of the second transmission area may also be pre-defined to be transmitted on the first transmission area. That is, the first transmission area where the measurement reference signals of the second transmission area are located may be pre-defined, and no higher layer signaling is required.

In FIG. 14, the subcarrier spacing of transmission area 1 is twice as the subcarrier spacing of transmission area 2. In this way, the length of each time domain symbol in transmission area 1 is half of the length of each time domain symbol in transmission area 2. If one transmission time unit is fixed to be one subframe, for example one subframe includes x time domain symbols, then the time domain length of one subframe in transmission area 2 is twice the length of the subframe in transmission area 1.Generally, traffic in transmission area 2 has a relatively loose delay requirement, so that the long subframe transmission is beneficial to utilize system resources. On the other hand, traffic in transmission area 1 has a relatively high latency requirement, so that the short subframe transmission is more beneficial to reduce the transmission delay.

It is to be noted that the transmission time unit in the embodiments of the present disclosure is not only limited to one subframe, such as a minimum scheduling time unit. Therefore, the subframe in the present disclosure may also be replaced with the transmission time unit.

The embodiment as shown in FIG. 15 is not covered by the claimed invention. FIG. 15 is a structure diagram of two transmission areas time division multiplexed according to embodiment three of the present disclosure. As shown in FIG. 15, the first transmission area and the second transmission area are time division multiplexed on the system bandwidth. The base station may semi-statically set some time units to be belonged to the first transmission area and some time units to be belonged to the second transmission area.

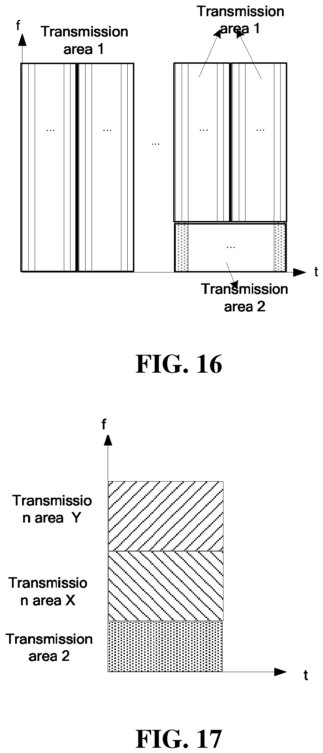

The embodiment as shown in FIG. 16 is not covered by the claimed invention. FIG. 16 is a structure diagram of two transmission areas time-frequency multiplexed according to embodiment three of the present disclosure. As shown in FIG. 16, the first transmission area and the second transmission area are multiplexed on the system bandwidth in a combination of time division multiplexing and frequency division multiplexing. If the traffic in the second transmission area is little, such division may further increase the utilization of system resources.

The measurement reference signals include: a beam measurement reference signal, a channel measurement reference signal, an interference measurement reference signal, a precoding reference signal and a sounding reference signal and the like.

The beam measurement reference signal means that the transmitting end transmits the measurement reference signals by using multiple beam directions, and the receiving end may detect the reference signals corresponding to the multiple beams and detect the best one or more beams. For the downlink beam reference signal, the user may feed back the identity (ID) number of the best beam to the base station. Then, the base station uses this beam to transmit data and the downlink control channel. So the beam reference signal is mainly used for measuring the beam direction of the space. According to the characteristics of the channel, on a similar frequency, the direction of the beam generally may be considered the same for one user because channel parameters such as an angle spread change very slow on the similar frequency. So in the same carrier frequency band, even if the two transmission areas are frequency domain multiplexed, the corresponding best beam directions are generally the same or very close. Thus, if the beam reference signal is transmitted on each transmission area, the overhead is very large. Since each beam may correspond to one analog beam in the high frequency band, and different RF beam multiplexing is preferably to be time division multiplexing, multiple beam reference signals require to be transmitted through multiple time domain symbols. The overhead of the beam reference signals will be large, especially in transmission area 2, because the length of the time domain symbol in transmission area 2 is very long.

To save the overhead of the beam reference signals, for a user that needs to transmit and receive traffic in transmission area 2, the base station may transmit the beam reference signal in transmission area 1 even if no traffic needs to be transmitted and received by the user in transmission area 1. This is because the length of the time domain symbol in transmission area 1 is relatively short, which may save the overhead. In this case, the base station needs to indicate the beam reference signals transmitted in transmission area 1 to be used for transmission area 2.

If the base station originally needs to transmit the beam reference signals on transmission area 1, and the beam reference signals cover the whole cell, then such method does not bring additional overhead to transmission area 1.

If the base station has traffic both on transmission area 1 and transmission area 2, then transmitting the beam reference signals only on transmission area 1 rather than transmission area 2 may also greatly reduce the overhead.

For the downlink channel measurement reference signal, a hybrid channel measurement reference signal and feedback thereof are now very popular in the industry. A channel measurement feedback process includes configuring two parts of the channel measurement reference signals. The first part of the measurement reference signals may be the non-pre-coding reference signals covering the whole cell, or may be constituted by multiple pre-coding channel measurement reference signals. The user transmits the first part of the channel information feedback, which generally includes long-term channel state information of the bandwidth, such as a response identifier (RI) of the channel and long-term pre-coding information to the base station through measuring the first part of the reference signals. The base station may transmit the second part of the measurement reference signals according to the long-term precoding channel state fed back by the UE. And a second measurement reference signal is directional, is a precoded measurement reference signal, and is generally user-specific. Since the base station transmits the second measurement reference signal in a user direction, a receiving power of the user will increase. According to the second measurement reference signal, the user needs to transmit the second part feedback, which generally includes a short-term channel state information of the subband, such as the RI, the pre-coding information and the channel 1uanlity indicator (CQI), to the base station. Finally, the base station determines a modulation and coding scheme (MCS) at the time of transmitting the data to the user according to the second part feedback fed back by the user. In general, the resource configuration of the two parts of the channel measurement reference signals is configured by the base station to the user through the higher layer signaling, that is, the base station configures two channel measurement reference signal resources in a channel measurement feedback process.

The first measurement reference signal described above reflects the user's perspective, and is the long-term channel information of the bandwidth, so even if the first measurement reference signal is transmitted in different transmission area, the influence on performance is not big. To save the overhead, the base station may transmit the first part of the measurement reference signals to the user in the first transmission area while the user may only have traffic in the second transmission area.

Since the second part of the measurement reference signals is used for measuring the short-term channel information of the subband, the resources of the second part of the measurement reference signals may only be configured in the second transmission area.

For the uplink sounding reference signal, which is similar to the beam reference signal, the base station may also transmit the sounding reference signal in the first transmission area to the user having traffic in the second transmission area.

Of course, if this method leads to the performance reduction, the above sounding reference signal and traffic data may be transmitted in the same transmission area. Different user may configure whether to transmit the measurement reference signals and traffic data to different transmission area according to different channel situation.

The above signaling may be the higher layer signaling or the dynamic signaling.

For transmission area 2, the base station may configure parameters such as the time-frequency position, the bandwidth and the subcarrier spacing of the first transmission area in which the measurement reference signals of the user are located through the higher layer signaling. The base station may further notify the user of the time-frequency position, bandwidth and period of the measurement reference signals in the first transmission area. Optionally, the base station may directly notify the user of parameters such as the time-frequency position, the bandwidth and the subcarrier spacing of the measurement reference signals through the higher layer signaling, and does not need to notify the user of information such as the time-frequency position and the bandwidth of the first transmission area.

For the hybrid channel measurement reference signal, if the user has traffic to transmit and receive in the second transmission area, the transmitting end indicates that the first part of the measurement reference signals in the measurement feedback process is in the first transmission area, and the second part of the measurement reference signal is in the second through the higher layer signaling. That is, the base station may configure parameters such as the time-frequency position, the bandwidth and the subcarrier spacing of the first transmission area in which the first part of the measurement reference signals of the user are located through the higher layer signaling. The base station may further notify the user of the time-frequency position, bandwidth and period of the first part of measurement reference signals in the first transmission area. Optionally, the base station may directly notify the user of parameters such as the time-frequency position, the bandwidth and the subcarrier spacing of the first part of the measurement reference signals through the higher layer signaling, and does not need to notify the user of information such as the time-frequency position and the bandwidth of the first transmission area. Of course, the parameters such as the time-frequency position, the bandwidth and the subcarrier spacing in the first transmission area may be pre-defined, and do not need signaling to notify.

Some parts of the above high layer signaling may be replaced with the dynamic signaling.

If the measurement reference signal is aperiodicaly or semi-continuously transmitted, the transmitting end may dynamically trigger the measurement reference signal in the first transmission area to be transmitted by using the control channel in the second transmission area. The first transmission area and the bandwidth, the time-frequency position and transmission structure of the measurement reference signal are configured by the higher layer signaling. The base station may trigger whether to transmit the measurement reference signal in the first transmission area through DCI. Of course, multiple first transmission areas or corresponding measurement reference signals may be semi-statically configured to the user, and the user triggers one of them in the DCI as needed. Such method needs to be scheduled or triggered across the transmission area because the base station triggers the transmission of the reference signals of the first transmission area in the second transmission area. And the advantage is that if the user has no traffic in the first transmission area, then there is no need to detect the control channel in the first transmission area. The embodiment as shown in FIG. 17 is not covered by the claimed invention. FIG. 17 is a structure diagram of three transmission areas frequency division multiplexed according to embodiment three of the present disclosure. As shown in FIG. 17, three transmission areas are on one carrier, and the measurement reference signals for the measurement feedback process of transmission area 2 may be pre-defined indicated, or semi-statically indicated or dynamically indicated to be in transmission area X or transmission area Y.

Of course, in the case that the measurement reference signal is aperiodicaly or semi-continuously transmitted, if the first transmission area and the bandwidth, time-frequency position and transmission structure of the measurement reference signal are configured by the higher layer signaling, the base station may also trigger the measurement reference signal on the control channel of the first transmission area. However, if the user has no traffic in the first transmission area, the UE complexity will be increased.

For the hybrid channel measurement reference signal, the first part of the measurement reference signals may be triggered on the control channel of the first transmission area, and the second part of the measurement reference signals should be triggered in the second transmission area. Of course, the first part of the measurement reference signals may also be triggered on the control channel of the second transmission area. Optionally, the first part of the measurement reference signals may also be configured by the higher layer signaling, and does not need to be dynamically triggered.

The subcarrier spacing corresponding to the first transmission area is greater than the subcarrier spacing corresponding to the second transmission area. To save the transmission overhead, especially for the beam reference signal, since the time domain symbol is relatively short, the subcarrier spacing of the first transmission area may be fixed to be larger than the subcarrier spacing of the second transmission area.

Correspondingly, for the uplink, it is assumed that two transmission areas correspond to a respective one of two downlink transmission areas. It is to be noted that the transmission area division of the uplink feedback may be the different from that of the downlink transmission. For example, the downlink may have two transmission areas while the uplink may only have one transmission area, in this case, the user may only feed back the measurement result in the only transmission area of the uplink. That is, the reference signal transmission and measurement result feedback of the present disclosure may be independent, and whether the measurement result is in the two transmission areas does not influence the reference signal transmission. If the uplink only has one transmission area, it may be assumed that the first transmission area and the second transmission area are the same. The division of the uplink and downlink transmission areas may be different regardless of time division duplex (TDD) or frequency division duplex (FDD). For example, two transmission areas are provided on the downlink while only one transmission area is provided on the uplink, and transmission structure parameters of the uplink transmission area may be different from that of the downlink. The uplink feedback area in the present disclosure does not affect claims of the downlink. For example, the user transmits downlink measurement reference signals in a certain transmission area on the carrier in the high frequency band, while the user feeds back the measurement result on the transmission area on the carrier in the low frequency band.

If the user has no traffic to be transmitted in the first uplink transmission area, then to reduce complexity, the user may feed back the measurement result in the second transmission area. Of course, if the user has traffic in the first uplink transmission area, then the complexity of feeding back the measurement result in first uplink transmission area is low.

In particular, for the hybrid channel measurement reference signal, the user may feed back the measurement results of the first part and the second part in the second uplink transmission area. Of course, the base station may configure the user to feed back the first part of measurement result in the first uplink transmission area and feed back the second part of measurement result in the second uplink transmission area.

For the downlink beam reference signal, after receiving the best beam ID fed back by the user, the base station may indicate the beam ID used at the time of transmitting the data in the second transmission area, in this case, the beam ID corresponds to the feedback corresponding to the beam reference signal detected by the user in the first transmission area.

That is, all or part of the measurement reference signals for acquiring the measurement feedback information in the second transmission area are transmitted in the first transmission area, and the finally base station uses the measurement feedback information to determine the data transmission mode of the user in the second transmission area. For example, for a beam reference signal, if the beam reference signal indicating for acquiring beam measurement feedback information of the second transmission area is transmitted in the first transmission area, the user feeds back the best beam ID or port number after measuring the beam reference signal transmitted in the first transmission area, and the base station determines that the user transmits a transmission beam of a downlink control channel or data channel by using the feedback result.

### Embodiment four

### Hybrid channel measurement reference signal

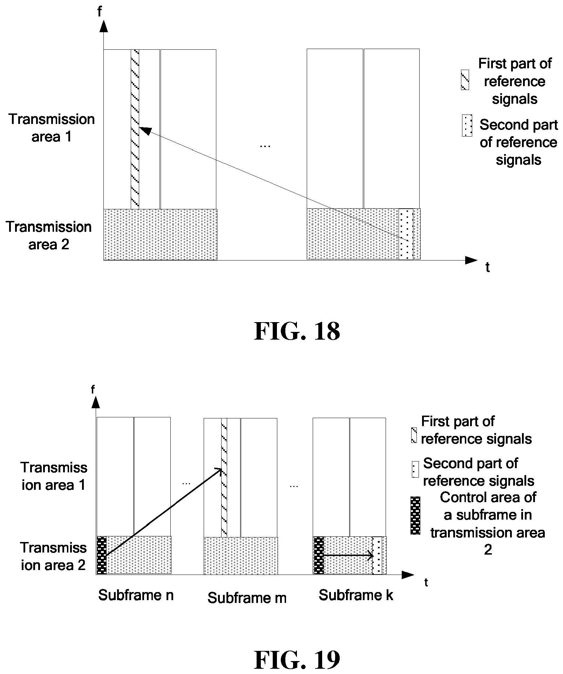

The embodiment as shown in FIG. 18 is not covered by the claimed invention. FIG. 18 is a structure diagram illustrating triggering measurement reference signals at the time of frequency division multiplexing of two transmission areas according to embodiment four of the present disclosure. A base station semi-statically notifies parameters of two transmission areas such as a time frequency position, a bandwidth length and a transmission structure. As shown in FIG. 18, the two transmission areas are frequency division multiplexed. For example, a subcarrier spacing of transmission area 2 is 15KHz, and a subcarrier spacing of transmission area 1 is 30KHz, so a subframe length of transmission area 2 is twice the subframe length of transmission area 1. That is, a length of a time domain orthogonal frequency division multiplexing symbol in one transmission area 2 is twice the length of the OFDM symbol in transmission area 1.If one subframe includes 14 time domain OFDM symbols, in a length of one subframe of one transmission area 2, two subframes of transmission areas are correspondingly provided (including 28 OFDM symbols).

The base station may configure a first part of the hybrid channel measurement reference signals to be transmitted in transmission area 1, and configure a second part of the measurement reference signals to be transmitted in transmission area 2. For example, the first part of the measurement reference signals is a non-precoding channel state information reference signal (CSI-RS), and the second part of the measurement reference signals is a precoding CSI-RS or a beamformed CSI-RS. The measurement and feedback of two parts of the measurement reference signals may both be used for data transmission of the second transmission area.

If the two parts of measurement reference signals are semi-statically higher layer configured and are transmitted periodically, then there is no need to be dynamically triggered through DCI. The user only needs to detect the first part of the measurement reference signals in the first transmission area according to the semi-static CSI-RS configuration, and then feeds back the long-term channel measurement information, such as RI, and the first part of the precoding indication information. And the user detects the second part of the measurement reference signals in the second transmission area according to the semi-statically configured CSI-RS resource, and then feeds back the short-term channel information. The second part of CSI-RS is a beamweighted CSI-RS, that is, the CSI-RS has a beam direction, thereby having a better signal coverage.

If in the TDD system, that is, the uplink and downlink are on one frequency band, for simplicity, the user may transmit the first part and the second part of the channel measurement information in the second uplink transmission area, which of course may or may not feedback at the same time. Of course, the user may also feed back the first part of the channel measurement result in the first uplink transmission area, and feed back the second part of the channel measurement result in the second uplink transmission area, which may be configured by the base station or pre-defined.

If in the FDD system, the uplink and downlink transmission structures may be the same or different. If two transmission areas are also provided on the uplink, then similarly, two parts of the measurement result may be placed in the second uplink transmission area, or the first part of the measurement result is placed in the first uplink transmission area, and the second part of the measurement result is placed in the second transmission area. Of course, the user may also feed back the two parts of the measurement result on other frequency bands. For example, the user transmits the first part of the reference signals in the first transmission area of the carrier in the high frequency band, while the user feeds back the first part of the measurement result on the carrier in the low frequency band.

If the two parts of the measurement reference signals are dynamically triggered by the DCI, for the sake of simplicity, the two parts of the measurement reference signals may be triggered on the control channel of the second transmission area, and may be triggered in the same subframe or different subframes. In this way, if the user has no downlink traffic in the first transmission area, then there is no need to detect downlink control signaling in the first transmission area.

The embodiment as shown in FIG. 19 is not covered by the claimed invention. FIG. 19 is a structure diagram illustrating triggering measurement reference signals at the time of frequency division multiplexing of two transmission areas according to embodiment four of the present disclosure. As shown in FIG. 19, the base station uses the control area of transmission area 2 to trigger the first part of the measurement reference signal on the subframe n, after triggering, the base station transmits the first part of the measurement reference signals in the first transmission area on the subframe m, the base station further triggers the second part of the measurement reference signal on the subframe k, and the second part of the measurement reference signal is transmitted on the subframe k.

Optionally, the first part of the measurement reference signals may be triggered in the first transmission area, and the second part of the measurement reference signals may be triggered in the second transmission area. If the two transmission areas both have traffic, then this method is intuitive and simple.

As shown in FIG. 18, the two parts of the measurement reference signals both belong to one measurement feedback process.

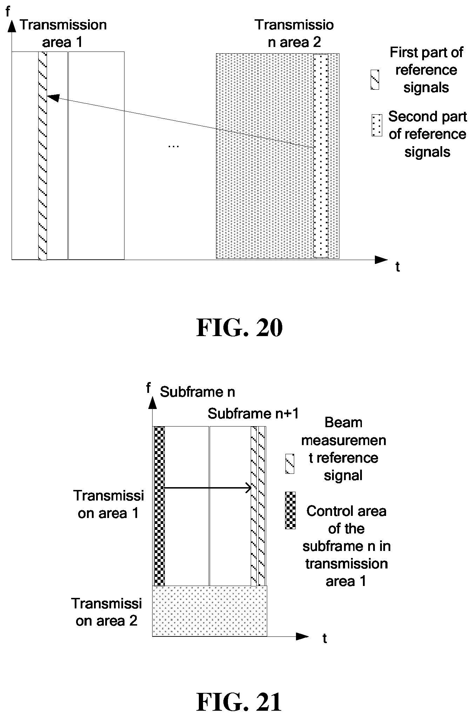

The embodiment as shown in FIG.20 is not covered by the claimed invention. FIG. 20 is a structure diagram illustrating triggering measurement reference signals at the time of two transmission areas time division multiplexed according to embodiment four of the present disclosure. FIG. 20 gives an example of dividing the two transmission areas in a manner of time division multiplexing. This process is similar to dividing the two transmission areas in the manner of frequency division multiplexing.

In fact, the user may consider that the two transmission areas share the first part of the measurement reference signals. That is, the measurement result of the first part of the measurement reference signals may be used for the transmission of the two transmission areas.

### Embodiment five

### Downlink beam reference signal

The embodiment as shown in FIG.21 is not covered by the claimed invention. FIG. 21 is a structure diagram illustrating triggering measurement reference signals at the time of frequency division multiplexing of two transmission areas according to embodiment five of the present disclosure. A base station semi-statically notifies parameters of two transmission areas such as a time frequency position, a bandwidth length and a transmission structure. As shown in FIG. 21, the two transmission areas are frequency division multiplexed. The base station notifies the user that beam measurement reference signals transmitted in transmission area 1 are used for transmission area 1.

If the beam measurement reference signals need to be dynamically triggered, then they may be triggered in a control area of transmission area 1. As shown in FIG. 21, after the base station triggers the beam measurement reference signals on a subframe n of transmission area 1, the base station transmits the beam measurement reference signals on subframe n+1. In this case, the user is needed to detect a control channel in transmission area 1 to detect whether the beam measurement reference signals are transmitted. After the user obtains a measurement result, the user feeds back the measurement result to the base station. A beam used when the base station transmits downlink data in a transmission area 2 or control channel data, or other reference signals is the beam measured and fed back in transmission area 1 by the user.

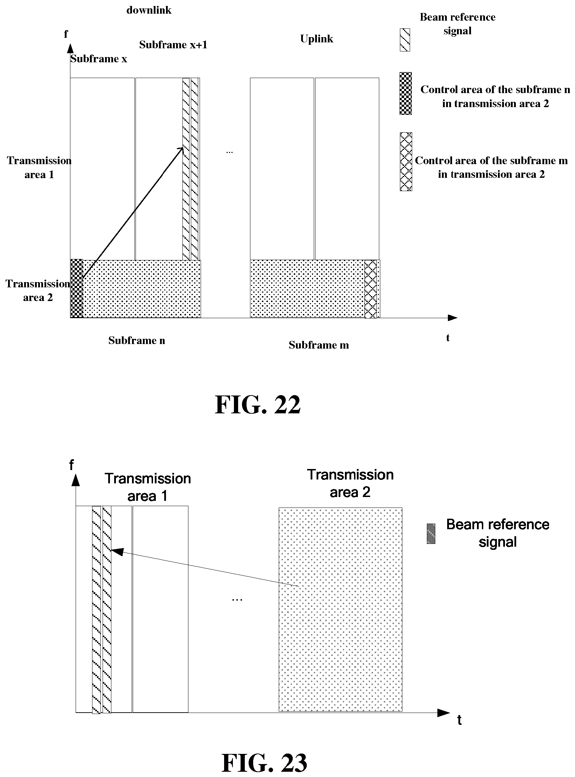

The embodiment as shown in FIG.22 is not covered by the claimed invention. FIG. 22 is a structure diagram illustrating triggering measurement reference signals at the time of frequency division multiplexing of two transmission areas according to embodiment five of the present disclosure. Optionally, the base station may trigger, in transmission area 2, the beam measurement reference signals to be transmitted in transmission area 1. As shown in FIG. 22, the base station triggers, in the control area on subframe n in transmission area 2, the beam reference signals to be transmitted on subframe x+1 in transmission area 1. After the user obtains the measurement result, the user feeds back the measurement result in an uplink control area on subframe m in transmission area 2. Here, it is assumed that subframe n in transmission area 2 is the downlink subframe, subframe m is the uplink subframe, and the uplink and downlink transmission areas are the same. It is to be noted that a subframe number of different transmission area may be different, but is associated. The subframe number of one transmission area may be selected as a reference subframe number.

If in a TDD system, the division of the uplink and downlink transmission areas may be similar. After the user measures the beam reference signals, the user may transmit the measurement result in uplink transmission area 1 corresponding to a downlink transmission area 1. Optionally, the user may feed back the measurement result in an uplink transmission area 2 corresponding to downlink transmission area 2. As shown in FIG. 22, the user feeds back the measurement result in the uplink transmission area 2.It is to be noted that the division of the uplink transmission area may be the same with the division of the downlink, or be different from the division of the downlink.

The division of the uplink and downlink transmission areas may be different regardless of TDD or FDD. For example, two transmission areas are provide on the downlink while only one transmission area is provided on the uplink, and transmission structure parameters of the uplink transmission area may be different from that of the downlink.

The uplink feedback area in the present disclosure does not affect claims of the downlink. For example, the user transmits downlink measurement reference signals in a certain transmission area on a carrier in a high frequency band, while the user feeds back the measurement result on a transmission area on a carrier in a low frequency band.

In fact, the user may consider that the two transmission areas share the beam reference signals. That is, if the user has traffic in a first transmission area, in this case, the beam reference signals does not need to divide the transmission area.

The embodiment as shown in FIG.23 is not covered by the claimed invention. FIG. 23 is a structure diagram illustrating triggering measurement reference signals at the time of time division multiplexing of two transmission areas according to embodiment five of the present disclosure. FIG. 23 gives an example of dividing the two transmission areas in a manner of time division multiplexing. This process is similar to dividing the two transmission areas in the manner of frequency division multiplexing.

The subcarrier spacing of the first transmission area may be limited to be greater than the subcarrier spacing of the second transmission area. In this way, the length of time domain symbol in the first transmission area is shorter than the length of time domain symbol in the second transmission area. The beam reference signals may transmit more time domain symbols in a shorter time in the first transmission area, and multiple time domain symbols correspond to multiple radio frequency beams.

### Embodiment six

### Uplink sounding reference signal

An uplink sounding reference signal is similar to a beam reference signal.

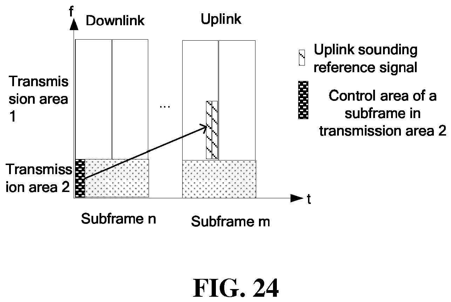

The embodiment as shown in FIG.24 is not covered by the claimed invention. FIG. 24 is a structure diagram illustrating triggering measurement reference signals at the time of frequency division multiplexing of two transmission areas according to embodiment six of the present disclosure. As shown in FIG., 24, it is assumed that for a TDD system, the division of uplink and downlink transmission areas is the same. A base station may configure, by higher layer signaling, sounding reference signals for transmission area 2 to be transmitted on a transmission area 1, in this case, no dynamic signaling is needed for indication.

If the dynamic signaling is needed to trigger the measurement reference signals, the dynamic signaling may trigger in downlink transmission area 1, and may also trigger in downlink transmission area 2. As shown in FIG. 24, the base station triggers the measurement reference signals on a downlink subframe n, and the user will transmit the uplink sounding reference signal on an uplink subframe m in the uplink transmission area 1.

### Embodiment seven

An embodiment of the present disclosure further provides a computer storage medium. In the embodiment, the storage medium may be configured to store program codes executed by the method for transmitting measurement reference signals provided in the above embodiment one.

In an embodiment of the present disclosure, in the embodiment, the storage medium may be located in any one of a group of computer terminals in a computer network, or located in any one of a group of mobile terminals.

In an embodiment of the present disclosure, in the embodiment, the storage medium is further configured to store program codes for executing step described below.

In step S1, a transmission mode of measurement reference signals to a receiving end is indicated by at least one of: pre-defined configuration, higher layer signaling and dynamic signaling, where the transmission mode includes: transmitting, through a first transmission area, all or part of measurement reference signals for acquiring measurement feedback information of a second transmission area.

An embodiment of the present disclosure further provides a computer storage medium. In an embodiment of the present disclosure, in the embodiment, the storage medium may be configured to store program codes for executing the method for receiving measurement reference signals provided in the above embodiment one.

In the embodiment, the storage medium is further configured to store program codes for executing step described below.

In step S1, a receiving end receives indication information by at least one of: pre-defined configuration, higher layer signaling and dynamic signaling, where the indication information is used for indicating a transmission mode of the measurement reference signals. The transmission mode includes: transmitting, through a first transmission area, all or part of measurement reference signals for measuring in a second transmission area.

The serial numbers of the embodiments described above of the present disclosure are merely for ease of description and do not indicate superiority and inferiority of the embodiments.

In the embodiments described above of the present disclosure, the description of each embodiment has its own emphasis. For a part not described in detail in one embodiment, reference may be made to a related description of other embodiments.

It should be understood that the technical content disclosed in the embodiments of the present application may be implemented in other ways. The device embodiments described above are merely illustrative. For example, a unit division is merely a logical function division, and, in practice, the unit division may be implemented in other ways. For example, multiple units or components may be combined or may be integrated into another system, or some features may be ignored or not executed. Additionally, the presented or discussed mutual coupling, direct coupling or communication connections may be indirect coupling or communication connections via interfaces, units or modules, or may be electrical or in other forms.

The units described above as separate components may or may not be physically separated. Components presented as units may or may not be physical units, i.e., may be located in one place or may be distributed on multiple network units. Part or all of these units may be selected according to practical requirements to achieve the objects of the solutions in the embodiments of the present disclosure.

Additionally, various functional units in each embodiment of the present disclosure may be integrated into one processing unit, or each unit may be physically present separately, or two or more units may be integrated into one unit. The integrated unit may be implemented by hardware or a software functional unit.

The integrated unit may be stored in a computer-readable storage medium if implemented in the form of the software functional unit and sold or used as an independent product. Based on this understanding, the solutions provided by the present disclosure substantially, or the part contributing to the existing art, may be embodied in the form of a software product. The computer software product is stored on a storage medium and includes several instructions for enabling a computer device (which may be a personal computer, a server, a network device or the like) to execute all or part of the steps in the methods provided by the embodiments of the present disclosure. The preceding storage medium includes: a USB flash drive, a ROM, a RAM, a mobile hard disk, a magnetic disk, an optical disk or another medium capable of storing program codes.

The above are only preferred embodiments of the present disclosure and are not intended to limit the present disclosure, and for those skilled in the art, the present disclosure may have various modifications and variations.

## Claims

1. A method for transmitting measurement reference signals, comprising:
indicating (S202) a transmission mode of the measurement reference signals to a receiving end by at least one of: pre-defined configuration, higher layer signaling and dynamic signaling, wherein the transmission mode comprises: transmitting, through a first transmission area, the measurement reference signals used for acquiring measurement feedback information of a second transmission area; and
receiving a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structures, and a transmission structure comprises at least one of: a subcarrier spacing and a cyclic prefix.

2. The method of claim 1, further comprising: in a case where the first transmission area and the second transmission area are multiplexed on carriers in a manner of frequency division multiplexing, notifying the receiving end of the following: a subcarrier spacing, a cyclic prefix and frequency domain bandwidth length of the first transmission area and the second transmission area.

3. The method of claim 1, wherein the measurement reference signals comprise at least one of: a beam measurement reference signal, a channel measurement reference signal, an interference measurement reference signal, a non-precoding reference signal, a precoding reference signal and a sounding reference signal.

4. The method of claim 3, wherein when the measurement reference signals comprise a first part and a second part, the transmission mode further comprises:
transmitting, through the first transmission area, the first part of the measurement reference signals, and transmitting, through the second transmission area, the second part of the measurement reference signals.

5. The method of claim 4, further comprising one of the followings:
triggering the measurement reference signals located in the first transmission area and/or the second transmission area by using triggering signaling located in the second transmission area;
triggering the measurement reference signals located in the first transmission area by using triggering signaling located in the first transmission area; and
triggering the first part of the measurement reference signals located in the first transmission area by using triggering signaling located in the first transmission area, and triggering the second part of the measurement reference signals located in the second transmission area by using triggering signaling located in the second transmission area.

6. The method of claim 4, wherein the receiving a measurement result fed back by the receiving end based on the measurement reference signals comprises one of the followings:
receiving the measurement result fed back by the receiving end on the first transmission area;
receiving the measurement result fed back by the receiving end on the second transmission area, and
receiving a first part of the measurement result fed back by the receiving end on the first transmission area, and a second part of the measurement result fed back by the receiving end on the second transmission area, wherein the first part of the measurement result corresponds to the first part of the measurement reference signals, and the second part of the measurement result corresponds to the second part of the measurement reference signals.

7. A method for receiving measurement reference signals, comprising:
receiving (S402), by a receiving end, indication information by at least one of: pre-defined configuration, higher layer signaling and dynamic signaling;
determining (S404), by the receiving end, a transmission mode of the measurement reference signals according to the received indication information, wherein the transmission mode at least comprises: transmitting the measurement reference signals used for acquiring measurement feedback information of a second transmission area on a first transmission area;
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

8. The method of claim 7, further comprising: in a case where the first transmission area and the second transmission area are multiplexed on carriers in a manner of frequency division multiplexing, receiving configuration about the following: a subcarrier spacing, a cyclic prefix and frequency domain bandwidth length of the first transmission area and the second transmission area.

9. The method of claim 7, further comprising feeding back a measurement result based on the measurement reference signals, wherein the measurement result comprises at least one of: state information about uplink channels, state information about downlink channels, an antenna port number, a beam ID, a reference signal resource number and an interference measurement result.

10. A device for transmitting measurement reference signals, applied to a transmitting end, comprising:
an indication module (60), configured to indicate a transmission mode of the measurement reference signals to a receiving end by at least one of: pre-defined configuration, higher layer signaling and dynamic signaling, wherein the transmission mode comprises: transmitting, through a first transmission area, the measurement reference signals used for acquiring measurement feedback information of a second transmission area;
wherein the device is further configured to receive a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structures, and a transmission structure comprises at least one of: a subcarrier spacing and a cyclic prefix.

11. A device for receiving measurement reference signals, applied to a receiving end, comprising:
a third receiving module (80), configured to receive indication information by at least one of: pre-defined configuration, higher layer signaling and dynamic signaling;
a determination module (82), configured to determine a receiving mode of measurement reference signals according to the received indication information, wherein the receiving mode at least comprises: receiving the measurement reference signals used for acquiring measurement feedback information of a second transmission area on a first transmission area,
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

12. A device for transmitting measurement reference signals, applied to a transmitting end, comprising:
a first processor (12); and
a first memory (14), configured to store instructions executable by the first processor (12);
wherein the first processor (12) is configured to perform, according to the instructions stored in the first memory (14), the following operations:
indicating a transmission mode of the measurement reference signals to a receiving end by at least one of: pre-defined configuration, higher layer signaling and dynamic signaling, wherein the transmission mode comprises: transmitting, through a first transmission area, the measurement reference signals used for acquiring measurement feedback information of a second transmission area; and
receiving a measurement result fed back by the receiving end based on the measurement reference signals, wherein the measurement result comprises at least one of: state information about uplink channels, state information about downlink channels, an antenna port number, a beam ID, a reference signal resource number and an interference measurement result;
wherein the first transmission area and the second transmission area correspond to different carriers; and
wherein different transmission areas correspond to different transmission structures, and a transmission structure comprises at least one of: a subcarrier spacing and a cyclic prefix.

13. A device for receiving measurement reference signals, applied to a receiving end, comprising:
a second processor (22); and
a second memory (24), configured to store instructions executable by the second processor (22);
wherein the second processor (22) is configured to perform, according to the instructions stored in the second memory (24), the following operations:
receiving indication information by at least one of: pre-defined configuration, higher layer signaling and dynamic signaling;
determining a transmission mode of the measurement reference signals according to the received indication information, wherein the transmission mode at least comprises: transmitting the measurement reference signals used for acquiring measurement feedback information of a second transmission area on a first transmission area;
wherein the measurement reference signals comprise at least one of: a beam measurement reference signal, a channel measurement reference signal, an interference measurement reference signal, a non-precoding reference signal, a precoding reference signal and a sounding reference signal;
wherein the first transmission area and the second transmission area correspond to different carriers; and
wherein different transmission areas correspond to different transmission structures, and a transmission structure comprises at least one of: a subcarrier spacing and a cyclic prefix.

14. A computer storage medium storing computer-executable instructions that, when executed by a computer, cause the computer to carry out the method for transmitting measurement reference signals of any one of claims 1 to 6.

15. A computer storage medium storing computer-executable instructions that Z p, when executed by a computer, cause the computer to carry out the method for receiving measurement reference signals of any one of claims 7 to 9.

## Patentansprüche

1. Verfahren zum Übertragen von Messreferenzsignalen, umfassend:
Anzeigen (S202) eines Übertragungsmodus der Messreferenzsignale für ein Empfangsende durch mindestens eines von Folgendem: eine vordefinierte Konfiguration, eine Signalisierung höherer Ebenen und eine dynamische Signalisierung, wobei der Übertragungsmodus Folgendes umfasst: Übertragen, durch einen ersten Übertragungsbereich, der Messreferenzsignale, die zum Erfassen von Messrückmeldungsinformationen eines zweiten Übertragungsbereichs verwendet werden; und
Empfangen eines Messergebnisses, das von dem Empfangsende auf Grundlage der Messreferenzsignale zurückgemeldet wird, wobei das Messergebnis mindestens eines von Folgendem umfasst:
Zustandsinformationen über Uplink-Kanäle, Zustandsinformationen über Downlink-Kanäle, eine Antennenanschlussnummer, eine Strahl-ID, eine Referenzsignalressourcennummer und ein Interferenzmessergebnis;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst: einen Unterträgerabstand und ein zyklisches Präfix.

2. Verfahren nach Anspruch 1, ferner umfassend: in einem Fall, in dem der erste Übertragungsbereich und der zweite Übertragungsbereich in einer Art von Frequenzmultiplexen auf Trägern gemultiplext sind, Benachrichtigen des Empfangsendes über Folgendes: einen Unterträgerabstand, ein zyklisches Präfix und eine Länge der Bandbreite des Frequenzbereichs des ersten Übertragungsbereichs und des zweiten Übertragungsbereichs.

3. Verfahren nach Anspruch 1, wobei die Messreferenzsignale mindestens eines von Folgendem umfassen: ein Strahlmessreferenzsignal, ein Kanalmessreferenzsignal, ein Interferenzmessreferenzsignal, ein Nicht-Vorkodierungsreferenzsignal, ein Vorkodierungsreferenzsignal und ein Tonreferenzsignal.

4. Verfahren nach Anspruch 3, wobei, wenn die Messreferenzsignale einen ersten Teil und einen zweiten Teil umfassen, der Übertragungsmodus ferner Folgendes umfasst:
Übertragen, durch den ersten Übertragungsbereich, des ersten Teils der Messreferenzsignale und Übertragen, durch den zweiten Übertragungsbereich, des zweiten Teils der Messreferenzsignale.

5. Verfahren nach Anspruch 4, ferner umfassend eines der Folgenden:
Auslösen der in dem ersten Übertragungsbereich und/oder dem zweiten Übertragungsbereich befindlichen Messreferenzsignale durch Verwenden einer in dem zweiten Übertragungsbereich befindlichen Auslösesignalisierung;
Auslösen der in dem ersten Übertragungsbereich befindlichen Messreferenzsignale durch Verwenden einer in dem ersten Übertragungsbereich befindlichen Auslösesignalisierung; und
Auslösen des in dem ersten Übertragungsbereich befindlichen ersten Teils der Messreferenzsignale durch Verwenden einer in dem ersten Übertragungsbereich befindlichen Auslösesignalisierung und Auslösen des in dem zweiten Übertragungsbereich befindlichen zweiten Teils der Messreferenzsignale durch Verwenden einer in dem zweiten Übertragungsbereich befindlichen Auslösesignalisierung.

6. Verfahren nach Anspruch 4, wobei das Empfangen eines Messergebnisses, das von dem Empfangsende auf Grundlage der Messreferenzsignale zurückgemeldet wird, eines der Folgenden umfasst:
Empfangen des von dem Empfangsende auf dem ersten Übertragungsbereich zurückgemeldeten Messergebnisses;
Empfangen des von dem Empfangsende auf dem zweiten Übertragungsbereich zurückgemeldeten Messergebnisses und Empfangen eines ersten Teils des von dem Empfangsende auf dem ersten Übertragungsbereich zurückgemeldeten Messergebnisses und eines zweiten Teils des von dem Empfangsende auf dem zweiten Übertragungsbereich zurückgemeldeten Messergebnisses, wobei der erste Teil des Messergebnisses dem ersten Teil der Messreferenzsignale entspricht und der zweite Teil des Messergebnisses dem zweiten Teil der Messreferenzsignale entspricht.

7. Verfahren zum Empfangen von Messreferenzsignalen, umfassend:
Empfangen (S402), durch ein Empfangsende, von Anzeigeinformationen durch mindestens eines von Folgendem: eine vordefinierte Konfiguration, eine Signalisierung höherer Ebenen und eine dynamische Signalisierung;
Bestimmen (S404), durch das Empfangsende, eines Übertragungsmodus der Messreferenzsignale gemäß den empfangenen Anzeigeinformationen, wobei der Übertragungsmodus mindestens Folgendes umfasst: Übertragen der zum Erfassen von Messrückmeldungsinformationen eines zweiten Übertragungsbereichs verwendeten Messreferenzsignale auf einem ersten Übertragungsbereich;
wobei die Messreferenzsignale mindestens eines von Folgendem umfassen: ein Strahlmessreferenzsignal, ein Kanalmessreferenzsignal, ein Interferenzmessreferenzsignal, ein Nicht-Vorkodierungsreferenzsignal, ein Vorkodierungsreferenzsignal und ein Tonreferenzsignal;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst: einen Unterträgerabstand und ein zyklisches Präfix.

8. Verfahren nach Anspruch 7, ferner umfassend: in einem Fall, in dem der erste Übertragungsbereich und der zweite Übertragungsbereich in einer Art von Frequenzmultiplexen auf Trägern gemultiplext sind, Empfangen einer Konfiguration über Folgendes: einen Unterträgerabstand, ein zyklisches Präfix und eine Länge der Bandbreite des Frequenzbereichs des ersten Übertragungsbereichs und des zweiten Übertragungsbereichs.

9. Verfahren nach Anspruch 7, ferner umfassend Rückmelden eines Messergebnisses auf Grundlage der Messreferenzsignale, wobei das Messergebnis mindestens eines von Folgendem umfasst: Zustandsinformationen über Uplink-Kanäle, Zustandsinformationen über Downlink-Kanäle, eine Antennenanschlussnummer, eine Strahl-ID, eine Referenzsignalressourcennummer und ein Interferenzmessergebnis.

10. Vorrichtung zum Übertragen von Messreferenzsignalen, die an ein Übertragungsende angelegt werden, umfassend:
ein Anzeigemodul (60), das dazu konfiguriert ist, einen Übertragungsmodus der Messreferenzsignale für ein Empfangsende durch mindestens eines von Folgendem anzuzeigen: eine vordefinierte Konfiguration, eine Signalisierung höherer Ebenen und eine dynamische Signalisierung, wobei der Übertragungsmodus Folgendes umfasst: Übertragen, durch einen ersten Übertragungsbereich, der Messreferenzsignale, die zum Erfassen von Messrückmeldungsinformationen eines zweiten Übertragungsbereichs verwendet werden;
wobei die Vorrichtung ferner dazu konfiguriert ist, ein Messergebnis, das von dem Empfangsende auf Grundlage der Messreferenzsignale zurückgemeldet wird, zu empfangen, wobei das Messergebnis mindestens eines von Folgendem umfasst:
Zustandsinformationen über Uplink-Kanäle, Zustandsinformationen über Downlink-Kanäle, eine Antennenanschlussnummer, eine Strahl-ID, eine Referenzsignalressourcennummer und ein Interferenzmessergebnis;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst: einen Unterträgerabstand und ein zyklisches Präfix.

11. Vorrichtung zum Empfangen von Messreferenzsignalen, die an ein Empfangsende angelegt werden, umfassend:
ein drittes Empfangsmodul (80), das dazu konfiguriert ist, Anzeigeinformationen durch mindestens eines von Folgendem zu empfangen: eine vordefinierte Konfiguration, eine Signalisierung höherer Ebenen und eine dynamische Signalisierung;
ein Bestimmungsmodul (82), das dazu konfiguriert ist, einen Empfangsmodus von Messreferenzsignalen gemäß den empfangenen Anzeigeinformationen zu bestimmen, wobei der Empfangsmodus mindestens Folgendes umfasst: Empfangen der zum Erfassen von Messrückmeldungsinformationen eines zweiten Übertragungsbereichs verwendeten Messreferenzsignale auf einem ersten Übertragungsbereich,
wobei die Messreferenzsignale mindestens eines von Folgendem umfassen: ein Strahlmessreferenzsignal, ein Kanalmessreferenzsignal, ein Interferenzmessreferenzsignal, ein Nicht-Vorkodierungsreferenzsignal, ein Vorkodierungsreferenzsignal und ein Tonreferenzsignal;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst: einen Unterträgerabstand und ein zyklisches Präfix.

12. Vorrichtung zum Übertragen von Messreferenzsignalen, die an ein Übertragungsende angelegt werden, umfassend:
einen ersten Prozessor (12); und
einen ersten Speicher (14), der dazu konfiguriert ist,
Anweisungen zu speichern, die durch den ersten Prozessor (12) ausführbar sind;
wobei der erste Prozessor (12) dazu konfiguriert ist, gemäß den in dem ersten Speicher (14) gespeicherten Anweisungen die folgenden Vorgänge durchzuführen:
Anzeigen eines Übertragungsmodus der Messreferenzsignale für ein Empfangsende durch mindestens eines von Folgendem: eine vordefinierte Konfiguration, eine Signalisierung höherer Ebenen und eine dynamische Signalisierung, wobei der Übertragungsmodus Folgendes umfasst: Übertragen, über einen ersten Übertragungsbereich, der Messreferenzsignale, die zum Erfassen von Messrückmeldungsinformationen eines zweiten Übertragungsbereichs verwendet werden; und
Empfangen eines Messergebnisses, das von dem Empfangsende auf Grundlage der Messreferenzsignale zurückgemeldet wird, wobei das Messergebnis mindestens eines von Folgendem umfasst: Zustandsinformationen über Uplink-Kanäle, Zustandsinformationen über Downlink-Kanäle, eine Antennenanschlussnummer, eine Strahl-ID, eine Referenzsignalressourcennummer und ein Interferenzmessergebnis;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst: einen Unterträgerabstand und ein zyklisches Präfix.

13. Vorrichtung zum Empfangen von Messreferenzsignalen, die an ein Empfangsende angelegt werden, umfassend:
einen zweiten Prozessor (22); und
einen zweiten Speicher (24), der dazu konfiguriert ist,
Anweisungen zu speichern, die durch den zweiten Prozessor (22) ausführbar sind;
wobei der zweite Prozessor (22) dazu konfiguriert ist, gemäß den in dem zweiten Speicher (24) gespeicherten Anweisungen die folgenden Vorgänge durchzuführen:
Empfangen von Anzeigeinformationen durch mindestens eines von Folgendem: eine vordefinierte Konfiguration, eine Signalisierung höherer Ebenen und eine dynamische Signalisierung;
Bestimmen eines Übertragungsmodus der Messreferenzsignale gemäß den empfangenen Anzeigeinformationen, wobei der Übertragungsmodus mindestens Folgendes umfasst: Übertragen der zum Erfassen von Messrückmeldungsinformationen eines zweiten Übertragungsbereichs verwendeten Messreferenzsignale auf einem ersten Übertragungsbereich;
wobei die Messreferenzsignale mindestens eines von Folgendem umfassen: ein Strahlmessreferenzsignal, ein Kanalmessreferenzsignal, ein Interferenzmessreferenzsignal, ein Nicht-Vorkodierungsreferenzsignal, ein Vorkodierungsreferenzsignal und ein Tonreferenzsignal;
wobei der erste Übertragungsbereich und der zweite Übertragungsbereich unterschiedlichen Trägern entsprechen; und
wobei unterschiedliche Übertragungsbereiche unterschiedlichen Übertragungsstrukturen entsprechen und eine Übertragungsstruktur mindestens eines von Folgendem umfasst:
einen Unterträgerabstand und ein zyklisches Präfix.

14. Computerspeichermedium, das computerausführbare Anweisungen speichert, die, wenn sie von einem Computer ausgeführt werden, bewirken, dass der Computer das Verfahren zum Übertragen von Messreferenzsignalen nach einem der Ansprüche 1 bis 6 ausführt.

15. Computerspeichermedium, das computerausführbare Anweisungen speichert, die, wenn sie von einem Computer ausgeführt werden, bewirken, dass der Computer das Verfahren zum Empfangen von Messreferenzsignalen nach einem der Ansprüche 7 bis 9 ausführt.

## Revendications

1. Procédé de transmission de signaux de référence de mesure, comprenant :
l'indication (S202) d'un mode de transmission des signaux de référence de mesure à une extrémité de réception par au moins l'une parmi : une configuration prédéfinie, une signalisation de couche supérieure et une signalisation dynamique, dans lequel le mode de transmission comprend : la transmission, à travers une première zone de transmission, des signaux de référence de mesure utilisés pour acquérir des informations de rétroaction de mesure d'une seconde zone de transmission ; et
la réception d'un résultat de mesure renvoyé par l'extrémité de réception sur la base des signaux de référence de mesure, dans lequel le résultat de mesure comprend au moins l'un parmi : des informations d'état sur les canaux de liaison montante, des informations d'état sur les canaux de liaison descendante, un numéro de port d'antenne, un ID de faisceau, un numéro de ressource de signal de référence et un résultat de mesure d'interférence ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

2. Procédé selon la revendication 1, comprenant en outre : dans un cas où la première zone de transmission et la seconde zone de transmission sont multiplexées sur des porteuses à la manière d'un multiplexage par répartition en fréquence, la notification à l'extrémité réceptrice des suivants : un espacement de sous-porteuse, un préfixe cyclique et une longueur de bande passante dans le domaine fréquentiel de la première zone de transmission et de la seconde zone de transmission.

3. Procédé selon la revendication 1, dans lequel les signaux de référence de mesure comprennent au moins l'un parmi : un signal de référence de mesure de faisceau, un signal de référence de mesure de canal, un signal de référence de mesure d'interférence, un signal de référence de non-précodage, un signal de référence de précodage et un signal de référence de sondage.

4. Procédé selon la revendication 3, dans lequel lorsque les signaux de référence de mesure comprennent une première partie et une seconde partie, le mode de transmission comprend en outre :
la transmission, à travers la première zone de transmission, de la première partie des signaux de référence de mesure, et la transmission, à travers la seconde zone de transmission, de la seconde partie des signaux de référence de mesure.

5. Procédé selon la revendication 4, comprenant l'un des suivants :
le déclenchement des signaux de référence de mesure situés dans la première zone de transmission et/ou la seconde zone de transmission en utilisant une signalisation de déclenchement située dans la seconde zone de transmission ;
le déclenchement des signaux de référence de mesure situés dans la première zone de transmission en utilisant une signalisation de déclenchement située dans la première zone de transmission ;
et
le déclenchement de la première partie des signaux de référence de mesure situés dans la première zone de transmission en utilisant une signalisation de déclenchement située dans la première zone de transmission, et le déclenchement de la seconde partie des signaux de référence de mesure situés dans la seconde zone de transmission en utilisant une signalisation de déclenchement située dans la seconde zone de transmission.

6. Procédé selon la revendication 4, dans lequel la réception d'un résultat de mesure renvoyé par l'extrémité de réception sur la base des signaux de référence de mesure comprend l'un des suivants :
la réception du résultat de mesure renvoyé par l'extrémité de réception sur la première zone de transmission ;
la réception du résultat de mesure renvoyé par l'extrémité de réception sur la seconde zone de transmission, et
la réception d'une première partie du résultat de mesure renvoyé par l'extrémité de réception sur la première zone de transmission, et d'une seconde partie du résultat de mesure renvoyé par l'extrémité de réception sur la seconde zone de transmission, dans lequel la première partie du résultat de mesure correspond à la première partie des signaux de référence de mesure, et la seconde partie du résultat de mesure correspond à la seconde partie des signaux de référence de mesure.

7. Procédé de réception de signaux de référence de mesure, comprenant :
la réception (S402), par une extrémité de réception, d'informations d'indication par au moins l'une parmi : une configuration prédéfinie, une signalisation de couche supérieure et une signalisation dynamique ;
la détermination (S404), par l'extrémité de réception, d'un mode de transmission des signaux de référence de mesure selon les informations d'indication reçues, dans lequel le mode de transmission comprend au moins : la transmission des signaux de référence de mesure utilisés pour acquérir des informations de rétroaction de mesure d'une seconde zone de transmission sur une première zone de transmission ;
dans lequel les signaux de référence de mesure comprennent au moins l'un parmi : un signal de référence de mesure de faisceau, un signal de référence de mesure de canal, un signal de référence de mesure d'interférence, un signal de référence de non-précodage, un signal de référence de précodage et un signal de référence de sondage ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

8. Procédé selon la revendication 7, comprenant en outre : dans un cas où la première zone de transmission et la seconde zone de transmission sont multiplexées sur des porteuses d'une manière de multiplexage à division de fréquence, la réception d'une configuration sur les suivants : un espacement de sous-porteuse, un préfixe cyclique et une longueur de bande passante dans le domaine fréquentiel de la première zone de transmission et de la seconde zone de transmission.

9. Procédé selon la revendication 7, comprenant en outre la rétroaction d'un résultat de mesure sur la base des signaux de référence de mesure, dans lequel le résultat de mesure comprend au moins l'un parmi : des informations d'état sur des canaux de liaison montante, des informations d'état sur des canaux de liaison descendante, un numéro de port d'antenne, un ID de faisceau, un numéro de ressource de signal de référence et un résultat de mesure d'interférence.

10. Dispositif de transmission de signaux de référence de mesure, appliqué à une extrémité de transmission, comprenant :
un module d'indication (60), configuré pour indiquer un mode de transmission des signaux de référence de mesure à une extrémité de réception par au moins l'une parmi : une configuration prédéfinie, une signalisation de couche supérieure et une signalisation dynamique, dans lequel le mode de transmission comprend : la transmission, à travers une première zone de transmission, des signaux de référence de mesure utilisés pour acquérir des informations de rétroaction de mesure d'une seconde zone de transmission ;
dans lequel le dispositif est en outre configuré pour recevoir un résultat de mesure renvoyé par l'extrémité de réception sur la base des signaux de référence de mesure, dans lequel le résultat de mesure comprend au moins l'un parmi : des informations d'état sur des canaux de liaison montante, des informations d'état sur des canaux de liaison descendante, un numéro de port d'antenne, un ID de faisceau, un numéro de ressource de signal de référence et un résultat de mesure d'interférence ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

11. Dispositif de réception de signaux de référence de mesure, appliqué à une extrémité de réception, comprenant :
un troisième module de réception (80), configuré pour recevoir des informations d'indication par au moins l'une parmi : une configuration prédéfinie, une signalisation de couche supérieure et une signalisation dynamique ;
un module de détermination (82), configuré pour déterminer un mode de réception de signaux de référence de mesure selon les informations d'indication reçues, dans lequel le mode de réception comprend au moins : la réception des signaux de référence de mesure utilisés pour acquérir des informations de rétroaction de mesure d'une seconde zone de transmission sur une première zone de transmission,
dans lequel les signaux de référence de mesure comprennent au moins l'un parmi : un signal de référence de mesure de faisceau, un signal de référence de mesure de canal, un signal de référence de mesure d'interférence, un signal de référence de non-précodage, un signal de référence de précodage et un signal de référence de sondage ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

12. Dispositif de transmission de signaux de référence de mesure, appliqué à une extrémité de transmission, comprenant :
un premier processeur (12) ; et
une première mémoire (14), configurée pour stocker des instructions exécutables par le premier processeur (12) ;
dans lequel le premier processeur (12) est configuré pour effectuer, selon les instructions stockées dans la première mémoire (14), les opérations suivantes :
l'indication d'un mode de transmission des signaux de référence de mesure à une extrémité de réception par au moins l'une parmi : une configuration prédéfinie, une signalisation de couche supérieure et une signalisation dynamique, dans lequel le mode de transmission comprend : la transmission, à travers une première zone de transmission, des signaux de référence de mesure utilisés pour acquérir des informations de rétroaction de mesure d'une seconde zone de transmission ; et
la réception d'un résultat de mesure renvoyé par l'extrémité de réception sur la base des signaux de référence de mesure, dans lequel le résultat de mesure comprend au moins l'un parmi : des informations d'état sur des canaux de liaison montante, des informations d'état sur des canaux de liaison descendante, un numéro de port d'antenne, un ID de faisceau, un numéro de ressource de signal de référence et un résultat de mesure d'interférence ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

13. Dispositif de réception de signaux de référence de mesure, appliqué à une extrémité de réception, comprenant :
un second processeur (22) ; et
une seconde mémoire (24), configurée pour stocker des instructions exécutables par le second processeur (22) ;
dans lequel le second processeur (22) est configuré pour effectuer, selon les instructions stockées dans la seconde mémoire (24), les opérations suivantes :
la réception d'informations d'indication par au moins l'une parmi : une configuration prédéfinie, une signalisation de couche supérieure et une signalisation dynamique ;
la détermination d'un mode de transmission des signaux de référence de mesure selon les informations d'indication reçues,
dans lequel le mode de transmission comprend au moins : la transmission des signaux de référence de mesure utilisés pour acquérir des informations de rétroaction de mesure d'une seconde zone de transmission sur une première zone de transmission ;
dans lequel les signaux de référence de mesure comprennent au moins l'un parmi : un signal de référence de mesure de faisceau,
un signal de référence de mesure de canal, un signal de référence de mesure d'interférence, un signal de référence de non-précodage, un signal de référence de précodage et un signal de référence de sondage ;
dans lequel la première zone de transmission et la seconde zone de transmission correspondent à des porteuses différentes ; et
dans lequel des zones de transmission différentes correspondent à des structures de transmission différentes, et une structure de transmission comprend au moins l'un parmi : un espacement de sous-porteuse et un préfixe cyclique.

14. Support de stockage informatique stockant des instructions exécutables par ordinateur qui, lorsqu'elles sont exécutées par un ordinateur, amènent l'ordinateur à réaliser le procédé de transmission de signaux de référence de mesure selon l'une quelconque des revendications 1 à 6.

15. Support de stockage informatique stockant des instructions exécutables par ordinateur qui, lorsqu'elles sont exécutées par un ordinateur, amènent l'ordinateur à réaliser le procédé de réception de signaux de référence de mesure selon l'une quelconque des revendications 7 à 9.
